# EUROPEAN PATENT APPLICATION

(11) **EP 4 570 547 A1**
(43) Date of publication of application: **18.06.2025**
(21) Application number: 24216577.7
(22) Date of filing: 29.11.2024
(51) Int. Cl.: B60K 1/00

(54) **ELECTRIC WORK VEHICLE**

(30) Priority: 14.12.2023 JP 2023211035
(71) Applicant: Yanmar Holdings Co., Ltd., Osaka-shi, Osaka (JP)
(72) Inventor: DAIYAKUJI, Taihei, Okayama (JP); HASHIMOTO, Yusuke, Okayama (JP); TAKAHASHI, Tsutomu, Okayama (JP); ISHIDA, Tomoki, Okayama (JP)
(74) Representative: Novagraaf International SA

(57) **Abstract**

[Problem] To provide a technique capable of appropriately disposing components in an electric work vehicle.

[Solution] An exemplary electric work vehicle includes a battery, an electric motor to which electric power is supplied from the battery, a travel unit that travels by a driving force of the electric motor, and a drive transmission unit that transmits the driving force of the electric motor to the travel unit. The electric motor and the drive transmission unit are disposed on one side of the battery.

## Description

### TECHNICAL FIELD

The present invention relates to an electric work vehicle.

### BACKGROUND ART

Conventionally, there is known an electric riding work vehicle including a pair of left and right drive wheels, a traveling motor for driving the drive wheels, and a battery for supplying electric power to the traveling motor (see, for example, Patent Document 1).

### PRIOR ART DOCUMENT

### PATENT DOCUMENT

Patent Document 1: Japanese Unexamined Patent Application Publication No. 2012-106522

### SUMMARY OF INVENTION

### TECHNICAL PROBLEM

In the case of fully motorizing a work vehicle to be driven only by electricity, it is necessary to increase the capacity of a battery, and thus the battery tends to be large. Meanwhile, if a fully electric work vehicle is to be used to perform work over a wide range of areas and for long periods of time by charging the battery once, a small work vehicle that consumes less power is desired. For this reason, for example, how to appropriately dispose a battery, a power electronics component required in association with the use of the battery, and the like to achieve compactness and optimization of weight balance becomes an issue.

In view of the above-described points, an object of the present invention is to provide a technique capable of appropriately disposing components of an electric work vehicle.

### SOLUTION TO PROBLEM

An exemplary electric work vehicle of the present invention includes a battery, an electric motor to which electric power is supplied from the battery, a travel unit that travels by a driving force of the electric motor, and a drive transmission unit that transmits the driving force of the electric motor to the travel unit. The electric motor and the drive transmission unit are disposed on one side of the battery.

### ADVANTAGEOUS EFFECTS OF INVENTION

According to an exemplary aspect of the present invention, it is possible to appropriately dispose components of an electric work vehicle.

### BRIEF DESCRIPTION OF DRAWINGS

FIG. 1 is a diagram illustrating a schematic configuration of an electric work vehicle.
FIG. 2 is a schematic perspective view illustrating a coverless vehicle body in which an exterior cover is removed from the vehicle body, and the exterior cover, as illustrated in FIG. 1.
FIG. 3 is a schematic exploded perspective view illustrating the coverless vehicle body illustrated in FIG. 2 in an exploded manner.
FIG. 4 is a schematic side view of the coverless vehicle body illustrated in FIG. 2.
FIG. 5 is a schematic perspective view illustrating a state where a main frame is attached to the travel unit.
FIG. 6 is a perspective view illustrating a schematic configuration of the travel drive device.
FIG. 7 is a perspective view illustrating a schematic configuration of a chassis including the travel unit, the main frame, and the travel drive device.
FIG. 8 is a view for explaining a structure of attaching a storage box to the chassis.
FIG. 9 is a view for explaining a structure of attaching the storage box to the chassis.
FIG. 10 is a view for explaining a structure of attaching a battery unit to the chassis.
FIG. 11 is a view for explaining a structure of attaching the battery unit to the chassis.
FIG. 12 is a schematic cross-sectional view illustrating a co-fastening structure of the storage box and the battery unit to the main frame.
FIG. 13 is a schematic plan view illustrating a relation between the travel unit and the battery.
FIG. 14 is a perspective view illustrating a schematic configuration of a subframe.
FIG. 15 is a schematic perspective view illustrating a state where the subframe is attached to the chassis.
FIG. 16 is a diagram illustrating a divided structure of the subframe.
FIG. 17 is a diagram for explaining an example of disassembly of the electric work vehicle at the time of battery maintenance such as battery replacement.
FIG. 18 is a perspective view illustrating a schematic configuration of the travel drive device.
FIG. 19 is a side view illustrating a schematic configuration of the travel drive device.
FIG. 20 is a perspective view illustrating a schematic configuration of the travel drive device from which a right case is removed.
FIG. 21 is a perspective view illustrating a schematic configuration of the travel drive device from which a case is removed.
FIG. 22 is a schematic perspective view of the travel drive device from which the case is removed as viewed from a direction different from FIG. 21.
FIG. 23 is a power transmission system diagram of a traveling system.
FIG. 24 is a power transmission system diagram of a turning system.
FIG. 25 is a schematic cross-sectional view illustrating a support structure of two motor shafts by a holding portion.

### DESCRIPTION OF EMBODIMENTS

An embodiment of the present invention will be described with reference to the drawings. Note that, in the drawings, the same or corresponding parts are denoted by the same reference numerals, and explanation thereof will not be repeated unless otherwise required.

### <1. Overview of Electric Work Vehicle>

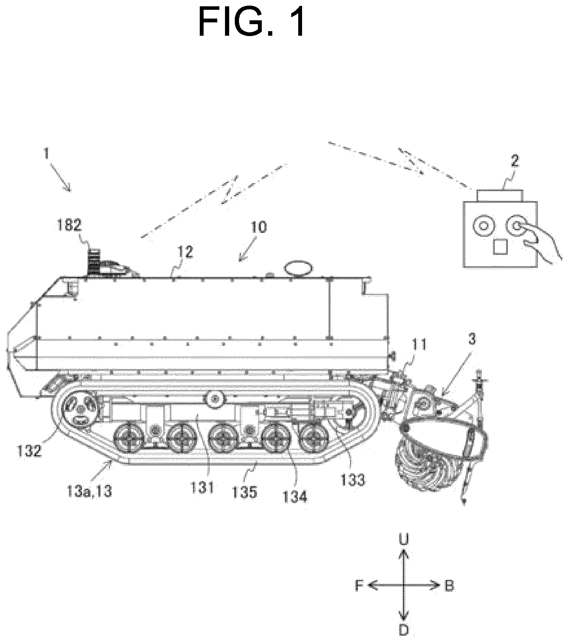

FIG. 1 is a diagram illustrating a schematic configuration of an electric work vehicle 1 according to an embodiment of the present invention. The electric work vehicle 1 can be used to perform various kinds of work such as agricultural work, civil engineering work, and construction work. As a preferred exemplary embodiment, the electric work vehicle 1 does not have a riding space in which an operator rides. That is, the electric work vehicle 1 is an unmanned work vehicle on which an operator does not ride. The electric work vehicle 1 is operated by an operator at a position away from the electric work vehicle 1 by using a remote operation device 2 provided so as to be capable of performing wireless communication with the electric work vehicle 1.

In the present embodiment, the electric work vehicle 1 can also perform work while automatically traveling in response to an instruction from the operator using the remote operation device 2. However, the electric work vehicle 1 may be configured not to be able to travel automatically. Note that the automatic traveling means that at least steering is autonomously performed by controlling a device related to traveling by the control device. In automatic travel, for example, control of the vehicle speed may be autonomously performed in addition to steering.

In general, in an electric work vehicle, the proportion of a battery, power electronics components, and the like in the vehicle tends to increase. Meanwhile, it is necessary to perform work by using only the electric power of the battery, and thus, if a work vehicle is to be used to perform work over a wide range of areas and for long periods of time by charging the battery once, it is not easy to increase the size of the vehicle in consideration of the problem of power consumption or the like, and it is necessary to reduce the size of the vehicle. Therefore, when a riding space is provided, the riding space and a space in which a component such as a battery is disposed have a trade-off in terms of space. In this regard, in the electric work vehicle 1 of the present embodiment, since there is no riding space, it is possible to increase the degree of freedom in the layout of components. In addition, since the degree of freedom in the layout of components can be increased, basic performance of the work vehicle, such as weight balance and compactness, can be improved. Details in this respect will be described below.

Further, since the electric work vehicle 1 of the present embodiment can perform work without an operator riding on the vehicle, it is possible to safely perform work even in a narrow space. Examples of the work in a narrow space include management work in an agricultural house or an orchard. By using the electric work vehicle 1 having no riding space, it is possible to perform work without causing a situation where a part of a human body such as a neck is caught by a beam of a house or a branch of a fruit tree, for example.

As illustrated in FIG. 1, the electric work vehicle 1 includes a vehicle body 10 and a work implement 3.

Here, for convenience of the explanation below, directions are defined as follows. A direction in which the vehicle body 10 and the work implement 3 are arranged is referred to as a front-rear direction, and the work implement 3 is on the rear side when viewed from the vehicle body 10. A left-right direction is defined in such a manner that a left side when viewed from the rear to the front is a left side and a right side when viewed from the rear to the front is a right side. Further, a gravity direction perpendicular to a front-rear direction and the left-right direction is defined as an up-down direction, an upstream side in the gravity direction is defined as "up", and a downstream side is defined as "down". In the drawings, when necessary, forward is denoted by a symbol "F", backward by "B", rightward by "R", leftward by "L", upward by "U", and downward by "D". Note that, these directions are names used merely for the explanation and are not intended to limit actual positional relations or directions.

### Details of the vehicle body 10 will be described below.

The work implement 3 is coupled to the vehicle body 10 with the use of a work implement coupling portion 11 provided at a rear end portion of the vehicle body 10. Specifically, the work implement 3 is replaceably attached to the work implement coupling portion 11. That is, the work implement 3 can be replaced with various types. In FIG. 1, the work implement 3 is a tiller. However, the work implement 3 may be, for example, a plow, a fertilizing device, an agricultural chemical spraying device, a harvesting device, a reaper, a snow removal device, a soil removal device, or the like, in addition to a tiller. In the present embodiment, the work implement 3 is provided so as to be able to be raised and lowered, but the work implement 3 may not be able to be raised and lowered.

In the present embodiment, the work implement 3 is attached only to the rear of the vehicle body 10, but this is merely an example. A device for performing work may be disposed in front of the vehicle body 10 in addition to the rear of the vehicle body 10. Alternatively, the work implement may be attached only to the front of the vehicle body 10.

### <2. Configuration of Vehicle Body>

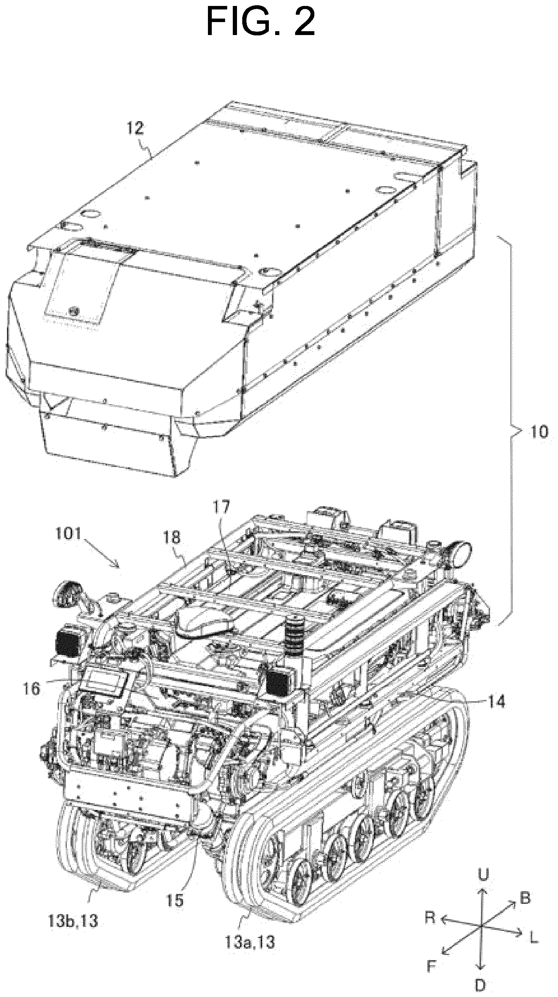

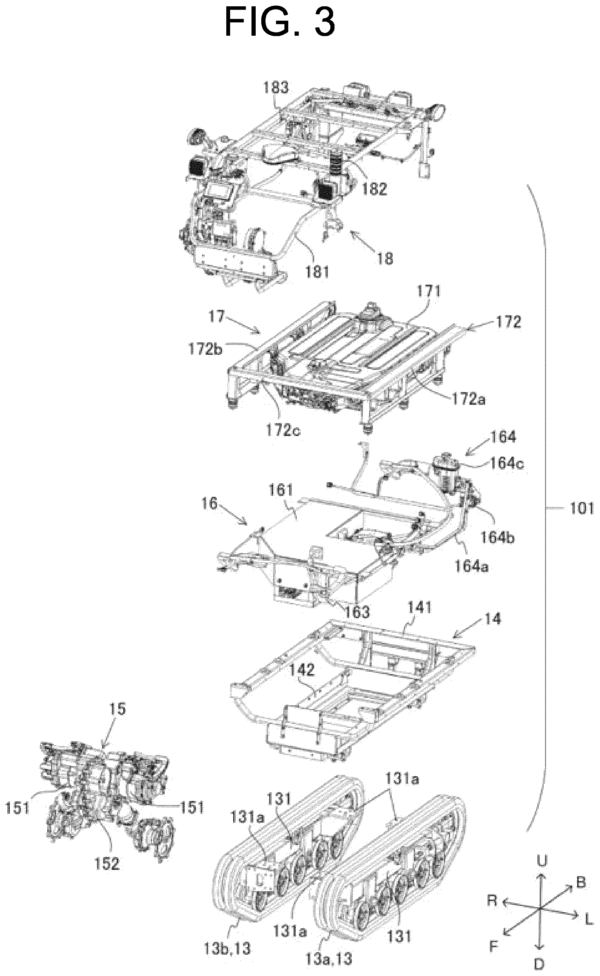

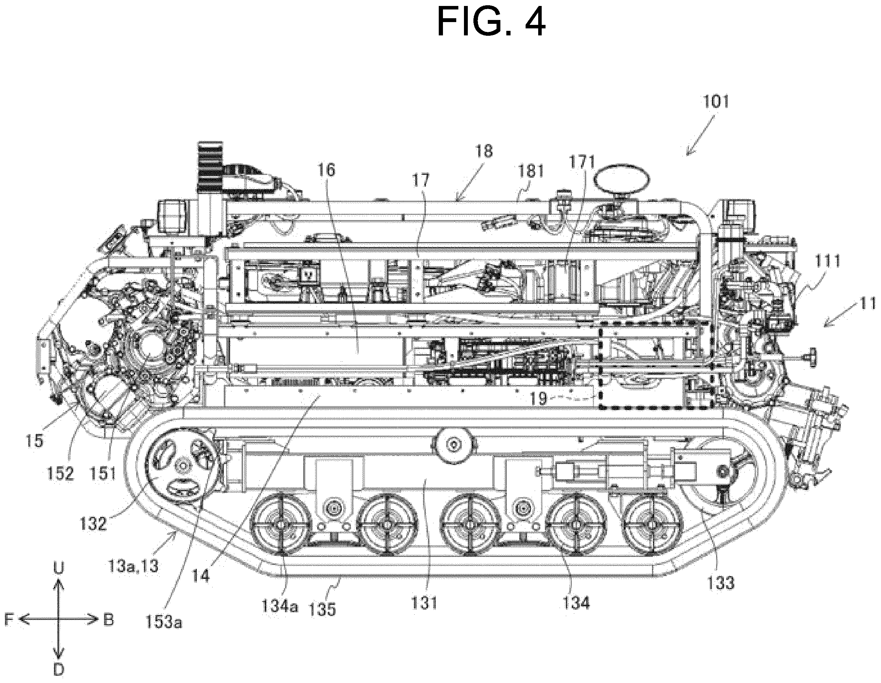

Next, a configuration of the vehicle body 10 will be described. First, a schematic configuration of the vehicle body 10 will be described with reference to FIGs. 2, 3, and 4. FIG. 2 is a schematic perspective view illustrating a coverless vehicle body 101 in which an exterior cover 12 is removed from the vehicle body 10 illustrated in FIG. 1, and the exterior cover 12. FIG. 3 is a schematic exploded perspective view illustrating the coverless vehicle body 101 illustrated in FIG. 2 in an exploded manner. FIG. 4 is a schematic side view of the coverless vehicle body 101 illustrated in FIG. 2.

As illustrated in FIGs. 2 to 4, the vehicle body 10 includes, in addition to the exterior cover 12, a travel unit 13, a main frame 14, a travel drive device 15, a power electronics unit 16, a battery unit 17, and an electrical component disposition frame portion 18. As illustrated in FIGs. 3 and 4, the travel unit 13, the main frame 14, the power electronics unit 16, the battery unit 17, and the electrical component disposition frame portion 18 are disposed in this order from bottom to top. The travel drive device 15 is disposed in front of the main frame 14, the power electronics unit 16, and the battery unit 17.

Although not illustrated in FIG. 3, as illustrated in FIG. 4, the above-described work implement coupling portion 11 for coupling the work implement 3 is disposed behind the main frame 14, the power electronics unit 16, and the battery unit 17. The work implement coupling portion 11 includes a work implement drive device 111 for operating the work implement 3. The work implement drive device 111 includes an electric motor serving as a drive source for operating the work implement 3, and a power take off (PTO) power transmission unit capable of transmitting power from the electric motor to the work implement 3.

### [2-1. Travel Unit]

As described above, the electric work vehicle 1 includes the travel unit 13. The travel unit 13 enables the vehicle body 10 to travel. Specifically, the travel unit 13 includes a pair of left and right crawlers 13a and 13b. The configurations of the left crawler 13a and the right crawler 13b are the same. Therefore, the configurations of the crawlers 13a and 13b will be described below by taking the case of the left crawler 13a illustrated in FIG. 4 as a representative example.

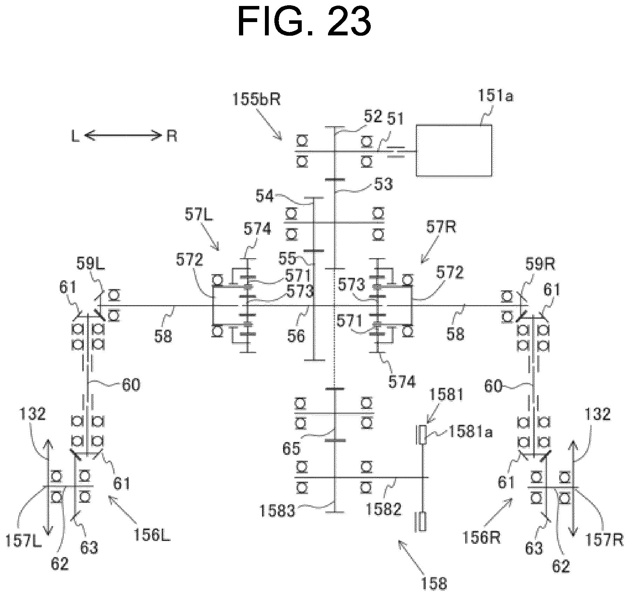

The left crawler 13a includes a track frame 131 extending in the front-rear direction. A drive sprocket 132 attached to an external output shaft 62 (see FIG. 23 and the like) of the travel drive device 15 is disposed as a drive wheel in front of the track frame 131. An idler 133 is disposed as a driven wheel at a rear end of the track frame 131. The idler 133 is rotatably supported by the track frame 131. A plurality of (five in this example) rollers 134 are rotatably supported between the drive sprocket 132 and the idler 133 of the track frame 131. The left crawler 13a is configured by winding a crawler belt 135 around the drive sprocket 132, the idler 133, and the plurality of rollers 134.

In the present embodiment, the left and right crawlers 13a and 13b has a configuration in which one drive wheel (drive sprocket 132) and one driven wheel (idler 133) are arranged in the front-rear direction and the crawler belt 135 is wound around the drive wheel and the driven wheel. However, another configuration may be adopted. For example, each of the left and right crawlers may be of a type in which a crawler belt is wound around one drive wheel and two driven wheels in a triangular shape. However, a crawler having a flat configuration as in the present embodiment is preferable because the height of the vehicle can be lowered and the vehicle can be easily made compact. Further, in the present embodiment, the travel unit 13 is constituted by a crawler system, but the travel unit of the electric work vehicle may be constituted by a system other than the crawler system, and for example, may be constituted by a wheel system.

### [2-2. Main Frame]

The main frame 14 constitutes a chassis of the electric work vehicle 1 together with the travel unit 13 and the travel drive device 15. The material of the main frame 14 is not particularly limited, but the main frame 14 is made of metal. The above-described exterior cover 12 is attached to at least the main frame 14. The exterior cover 12 is fixed to the main frame 14 with the use of a fastener such as a bolt and a nut. In the present embodiment, the exterior cover 12 is also attached to the electrical component disposition frame portion 18.

As illustrated in FIG. 3, the main frame 14 includes a U-shaped upper frame portion 141 extending in the front-rear direction, and a frame-shaped lower frame portion 142 disposed below the upper frame portion 141 with a space therebetween. The main frame 14 has a structure in which an upper frame portion 141 and a lower frame portion 142 are coupled to each other at a plurality of locations including a front end portion and a rear end portion. With such a configuration, the main frame 14 has an internal space surrounded by the frame. Further, the upper frame portion 141 has a width in the left-right direction (lateral width) larger than that of the lower frame portion 142. In a very rough expression, the outer shape of the main frame 14 is a trapezoidal shape in which the upper edge is longer than the lower edge in a plan view (front view) in the front-rear direction.

As illustrated in FIG. 3, each of the track frames 131 of the left and right crawlers 13a and 13b is provided at its front and rear portions with a frame attachment portion 131a protruding inward in the left-right direction. The upper surfaces of the four frame attachment portions 131a and the lower surface of the lower frame portion 142 of the main frame 14 are superimposed on each other so as to face each other, and are fastened to each other using a fastener, whereby the main frame 14 is attached to the left and right crawlers 13a and 13b. That is, the electric work vehicle 1 includes the main frame 14 supported by the travel unit 13. A bolt and a nut, for example, is used as the fastener for fastening the main frame 14 to the frame attachment portion 131a.

In the present embodiment, as a preferred exemplary embodiment, the frame attachment portion 131a has a tread adjustment structure that enables a change in the left-right direction interval between the left and right crawlers 13a and 13b (tread change). The tread adjustment structure is, for example, a structure in which a plurality of bolt holes are provided in the left-right direction in such a manner that the position in the left-right direction of the bolt that fastens the main frame 14 and the frame attachment portion 131a can be changed.

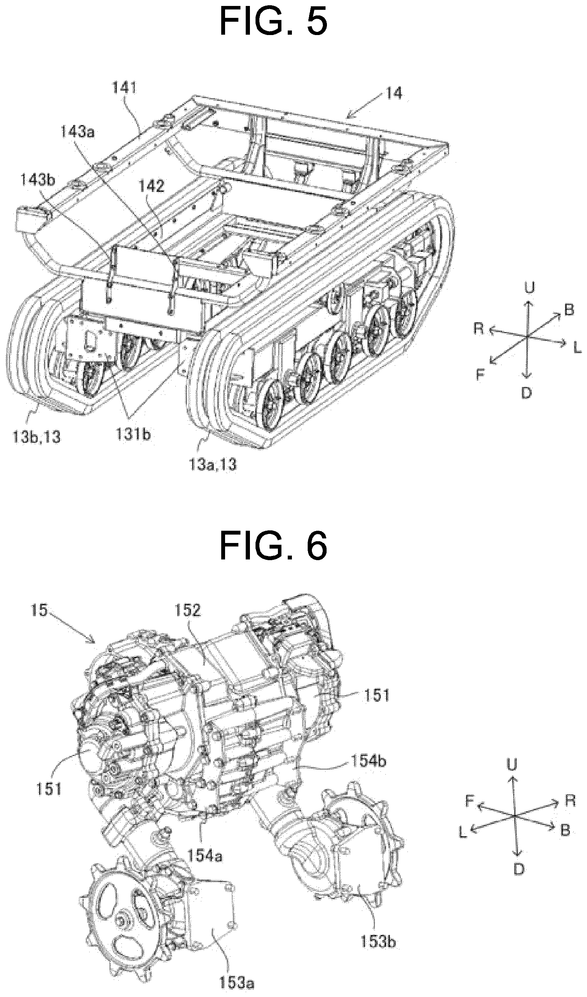

FIG. 5 is a schematic perspective view illustrating a state where the main frame 14 is attached to the travel unit 13. As illustrated in FIG. 5, in a state where the main frame 14 is attached to the travel unit 13, a lower portion side of the lower frame portion 142 is disposed between the left and right crawlers 13a and 13b in the left-right direction. Further, the upper side of the lower frame portion 142 and the upper frame portion 141 are disposed above the upper ends of the left and right crawlers 13a and 13b. Specifically, a left frame portion of the U-shaped upper frame portion 141 is disposed outward (leftward) in the left-right direction with respect to an inner end portion (right end portion) of the left crawler 13a in the left-right direction. Further, a right frame portion of the upper frame portion 141 is disposed outward (rightward) in the left-right direction with respect to an inner end portion (left end portion) of the right crawler 13b in the left-right direction.

### [2-3. Travel Drive Device]

As illustrated in FIG. 3, the travel drive device 15 includes an electric motor 151 and a drive transmission unit 152. That is, the electric work vehicle 1 includes the electric motor 151 and the drive transmission unit 152. The drive transmission unit 152 transmits the driving force of the electric motor 151 to the travel unit 13. Specifically, the drive transmission unit 152 transmits the driving force of the electric motor 151 to the above-described drive sprocket 132 (see FIG. 4). In other words, the travel unit 13 travels by the driving force of the electric motor 151.

The travel drive device 15 is attached to the travel unit 13 and the main frame 14. As described above, the travel drive device 15 includes the electric motor 151. Therefore, in other words, the electric motor 151 is supported by the travel unit 13 and the main frame 14. By supporting the electric motor 151 with a plurality of members in this manner, the electric motor 151 can be firmly supported.

As illustrated in FIG. 5, a first device attachment portion 131b having a rectangular flat surface (front end surface) extending in the vertical direction (up-down direction) is provided at a front end of each track frame 131 of the left and right crawlers 13a and 13b. Further, a pair of second device attachment portions 143a and 143b are provided on the front surface of the main frame 14 so as to be spaced apart from each other in the left-right direction. The pair of second device attachment portions 143a and 143b are disposed symmetrically. The pair of second device attachment portions 143a and 143b are flat plate-shaped protruding pieces that protrude forward from the front surface of the main frame 14 and extend in the up-down direction.

FIG. 6 is a perspective view illustrating a schematic configuration of the travel drive device 15. FIG. 6 is a view seen from a direction different from that of the travel drive device 15 illustrated in FIG. 3 (specifically, obliquely rearward to the left). As illustrated in FIG. 6, a pair of lower attachment portions 153a and 153b spaced apart from each other in the left-right direction are provided on a lower portion of a rear surface of the travel drive device 15. Each of the pair of lower attachment portions 153a and 153b has a rectangular flat surface (rear end surface) extending in the vertical direction (up-down direction). Further, a pair of upper attachment portions 154a and 154b spaced apart from each other in the left-right direction are provided on an upper portion of a rear surface of the travel drive device 15. The pair of upper attachment portions 154a and 154b are disposed symmetrically. The pair of upper attachment portions 154a and 154b are flat plate-shaped protruding pieces that protrude rearward from the rear surface of the travel drive device 15 and extend in the up-down direction.

When the travel drive device 15 is attached to the travel unit 13, the rear end surface of the lower attachment portion 153a on the left side of the pair of lower attachment portions 153a and 153b faces and is superimposed with the front end surface of the first device attachment portion 131b provided on the left crawler 13a in the front-rear direction. Further, the rear end surface of the right lower attachment portion 153b faces and is superimposed with the front end surface of the first device attachment portion 131b provided on the right crawler 13b in the front-rear direction. Then, the two superimposed portions are fastened by a fastener such as a bolt and a nut, whereby the travel drive device 15 is fixed to the travel unit 13.

As in the case of the attachment of the main frame 14 to the travel unit 13, the first device attachment portion 131b has a tread adjustment structure capable of changing the tread. The tread adjustment structure is, for example, a structure in which a plurality of bolt holes are provided in the left-right direction in such a manner that the position in the left-right direction of the bolt that fastens the lower attachment portion 153a and 153b and the first device attachment portion 131b can be changed.

Further, when the travel drive device 15 is attached to the main frame 14, the pair of upper attachment portions 154a and 154b provided on the travel drive device 15 side are disposed so as to sandwich the pair of second device attachment portions 143a and 143b provided on the main frame 14 side in the left-right direction. Thus, the left upper attachment portion 154a and the left second device attachment portion 143a overlap each other in the left-right direction, and the right upper attachment portion 154b and the right second device attachment portion 143b overlap each other in the left-right direction. The left upper attachment portion 154a overlaps the left second device attachment portion 143a in a state of being positioned on the left side. The right upper attachment portion 154a overlaps the right second device attachment portion 143a in a state of being positioned on the right side. The left and right overlapping protruding pieces are fastened to each other by a fastener such as a bolt and a nut, whereby the travel drive device 15 is fixed to the main frame 14.

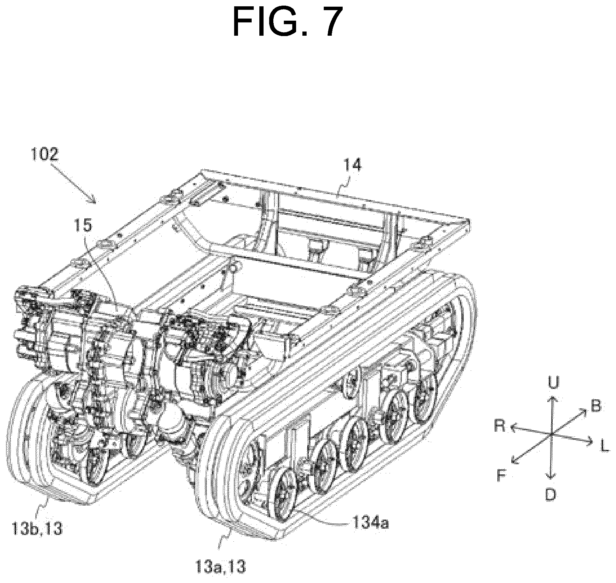

FIG. 7 is a perspective view illustrating a schematic configuration of a chassis 102 including the travel unit 13, the main frame 14, and the travel drive device 15. As illustrated in FIG. 7, the travel drive device 15 is disposed in front of the main frame 14. Further, the travel drive device 15 is disposed in front of a first roller 134a of the left and right crawlers 13a and 13b (see FIG. 4). The first roller 134a is the roller 134 disposed at the forefront end of the ground contact area of the crawlers 13a and 13b. The front end of the travel drive device 15 is positioned in front of the front end of the travel unit 13 (the left and right crawlers 13a and 13b) (see FIG. 4).

With such a configuration, in the electric work vehicle 1, the travel drive device 15 is disposed on the opposite side of the work implement coupling portion 11 (specifically, the opposite side in the front-rear direction). In this case, the travel drive device 15 can be made to function as a counterweight for the vehicle rear member including the work implement 3. That is, by disposing the travel drive device 15 at the front portion of the vehicle, the weight balance can be improved in a state where the work implement 3 is attached to the vehicle body 10. Further details of the travel drive device 15 will be described below.

### [2-4. Power Electronics Unit]

The power electronics unit 16 is a portion in which electronic components (power-electronics related components) including power electronics components, which are components for power control such as an inverter and a converter, are intensively disposed, and has a structure in which at least some of the electronic components are unitized. As illustrated in FIG. 3, the power electronics unit 16 includes a storage box 161 and a high-voltage cable 163. The high-voltage cable 163 is, for example, a high-voltage electric cable such as a 300 V.

The storage box 161 is a box that stores at least some of the power electronics related components.

For example, inverters (described below), a direct current (DC)-(DC) converter for converting a high voltage into a low voltage, a charger for charging the battery 171 included in the battery unit 17, a controller for integrally controlling power electronic components, an inverter for external power supply (for example, an alternating current (AC) 100V), a junction box, a relay, a fuse box, a blower for cooling the DC-DC converter, and the like (all not illustrated) are disposed inside the storage box 161. Power electronics related components including power electronics components are disposed in the storage box 161, and the storage box 161 can be referred to as a power electronics unit. The storage box 161 is provided with a plurality of holes (not illustrated) through which electric wires for electrically connecting components disposed inside and external components pass.

A plurality of electronic components including power electronic components can be unitized by the storage box 161. Due to the unitization, a plurality of electronic components can be attached to and detached from the vehicle body 10 as a unit at the time of maintenance, and thus the maintainability can be improved. In addition, since the harness is unitized, the number of attachment/detachment locations of the harness at the time of maintenance can be reduced, and the work load at the time of maintenance can be reduced.

The inverter of the power electronics unit 16 is connected to the battery 171 included in the battery unit 17, the electric motor 151 included in the travel drive device 15, and the electric motor (not illustrated) included in the work implement drive device 111 via the high-voltage cable 163. Further, the inverter is connected to a controller disposed in the storage box 161 through a signal line. The inverter converts a DC power supplied from the battery 171 into an AC power and supplies the AC power to the electric motor.

In the present embodiment, the electric work vehicle 1 includes a cooling system 164 for cooling the inverter (see FIG. 3). The cooling system 164 is disposed behind the storage box 161. The cooling system 164 is provided with a pipe 164a through which a coolant for cooling the inverter flows, a pump 164b for circulating the coolant, and a tank 164c for storing the coolant. In addition, the cooling system 164 may include a radiator. The cooling system 164 may or may not be included in the power electronics unit 16.

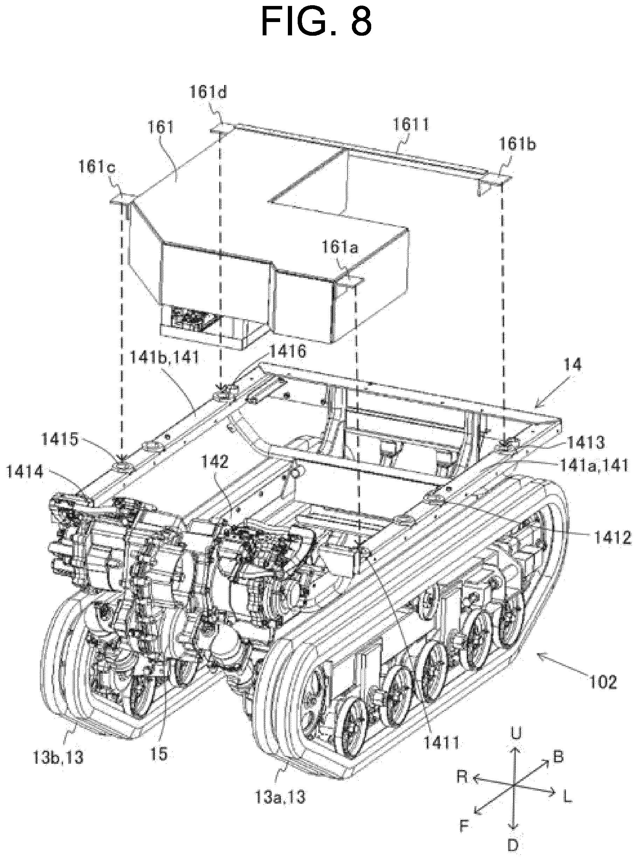

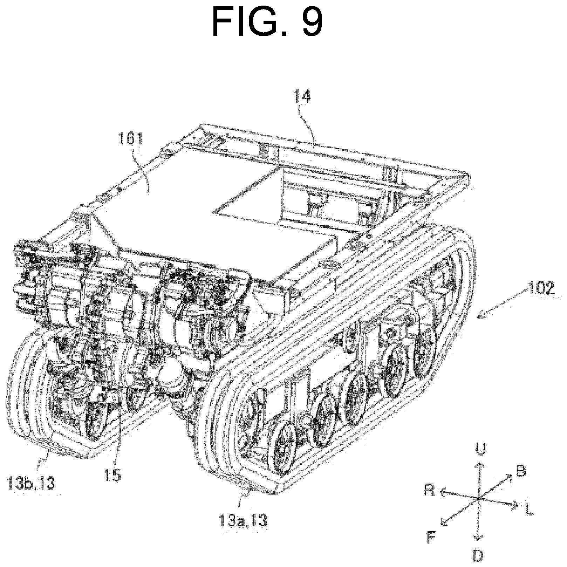

FIGs. 8 and 9 are views for explaining a structure of attaching a storage box 161 to the chassis 102. FIG. 8 illustrates a state before the storage box 161 is attached to the chassis 102. FIG. 9 illustrates a state where the storage box 161 is attached to the chassis 102.

As illustrated in FIGs. 8 and 9, the storage box 161 has an L-shaped structure in a plan view in which the width of the front portion in the left-right direction is larger than that of the rear portion. Further, an extension member 1611 extending in the left-right direction is attached to the upper edge of the rear end of the storage box 161. The extension member 1611 extends further leftward than the left side surface of the rear portion of the storage box 161.

On the left side surface of the storage box 161, a first foot portion 161a protruding leftward from the upper edge of the front portion of the box and a second foot portion 161b protruding leftward from the left end of the extension member 1611 are provided. The first foot portion 161a and the second foot portion 161b are arranged at the same position in the up-down direction and the left-right direction and are spaced apart from each other in the front-rear direction. On the right side surface of the storage box 161, a third foot portion 161c protruding rightward from the upper edge of the front portion of the box and a fourth foot portion 161d protruding rightward from the upper edge of the rear portion of the box are provided. The third foot portion 161c and the fourth foot portion 161d are arranged at the same position in the up-down direction and the left-right direction and are spaced apart from each other in the front-rear direction.

On the left frame 141a of the upper frame portion 141 constituting the main frame 14, a first attachment portion 1411, a second attachment portion 1412, and a third attachment portion 1413 are arranged in this order from the front to the rear at intervals in the front-rear direction. Further, on the right frame 141b of the upper frame portion 141, a fourth attachment portion 1414, a fifth attachment portion 1415, and a sixth attachment portion 1416 are arranged in this order from the front to the rear at intervals in the front-rear direction. Some of the attachment portions 1411 to 1416 are used in combination with the four foot portions 161a to 161d of the storage box 161.

In a state where the storage box 161 is attached to the chassis 102, the first foot portion 161a and the first attachment portion 1411 are disposed to overlap with each other in the up-down direction. Further, the second foot portion 161b and the third attachment portion 1413 are disposed to overlap each other in the up-down direction. Furthermore, the third foot portion 161c and the fifth attachment portion 1415 are disposed to overlap each other in the up-down direction. In addition, the fourth foot portion 161d and the sixth attachment portion 1416 are disposed to overlap each other in the up-down direction. Then, the overlapped portion is fastened with the use of a fastener such as a bolt and a nut. The storage box 161 is attached to the main frame 14 after anti-vibration measures are taken, which will be described below.

Since the first to fourth foot portions 161a to 161d are disposed at the upper end portion of the storage box 161, the storage box 161 is attached to the chassis 102 in a state where the periphery (side surface portion) is surrounded by the main frame 14. In other words, the storage box 161 attached to the chassis 102 is disposed inside the main frame 14.

In the above description, the storage box 161 is attached to the main frame 14 at four locations, but this is merely an example, and the number and positions of the locations at which the storage box 161 is attached to the main frame 14 may be changed as appropriate.

Further, in the present embodiment, the storage box 161 is configured to be provided in an L-shape in a plan view, but the shape of the storage box 161 may be changed as appropriate.

As illustrated in FIGs. 9 and 4, the power electronics unit 16 is disposed behind the travel drive device 15. Further, the power electronics unit 16 is disposed in front of the work implement coupling portion 11 including the work implement drive device 111. Furthermore, the power electronics unit 16 is disposed so as to overlap the travel unit 13 in a plan view. Specifically, in a plan view, a portion of the power electronics unit 16 is disposed between the left and right crawlers 13a and 13b, and another portion of the power electronics unit 16 is disposed so as to overlap at least one of the left and right crawlers 13a and 13b.

Further, the power electronics unit 16 is disposed between the battery 171 and the travel unit 13 in the up-down direction. In other words, at least one power electronic component is disposed between the battery 171 and the travel unit 13. In the travel unit 13 constituted by the left and right crawlers 13a and 13b, a clearance is formed between the left and right crawlers 13a and 13b. A portion of the power electronics unit 16 (power electronics component) may enter this clearance. Even in such a case, when a part of the power electronic component is present between the lower end of the battery 171 and the upper end of the travel unit 13 in the up-down direction, the power electronic component is considered to be present between the battery 171 and the travel unit 13. Since the battery 171, the power electronics unit 16 (power electronics components), and the travel unit 13 are arranged side by side, it is possible to make the outer shape of the electric work vehicle 1 compact by using the space without waste.

In the present embodiment, electronic components including power electronics components (power electronics related components) are disposed in a central portion of the electric work vehicle 1 in the up-down direction. That is, the power electronics related components are integrally disposed near the center of gravity of the electric work vehicle 1. The electric work vehicle 1 tries to rotate around the center of gravity when the electric work vehicle 1 receives a disturbance due to a step on a road surface or the like. In this regard, according to the present embodiment, since the power electronics related component are integrally disposed in the vicinity of the center of rotation, it is possible to reduce shaking of the power electronics related components due to disturbance. In particular, power electronic components are often sensitive to vibration, and it is important to suppress the vibration of the power electronic components by disposing the power electronic components as in the present embodiment.

That is, by disposing the power electronics unit 16 as in the present embodiment, the reliability of the electric work vehicle 1 can be improved.

### [2-5. Battery Unit]

As illustrated in FIG. 3, the battery unit 17 includes a battery 171 and a battery frame 172. That is, the electric work vehicle 1 includes the battery 171. As described above, the battery 171 supplies electric power to the electric motor 151 serving as the drive source of the travel unit 13. In other words, the electric motor 151 is supplied with electric power from the battery 171. As described above, the battery 171 also supplies electric power to the electric motor included in the work implement drive device 111 serving as the drive source of the work implement 3.

The battery frame 172 supports the battery 171. Specifically, the battery frame 172 includes a left battery frame portion 172a, a right battery frame portion 172b, and a front battery frame portion 172c. Each of the left battery frame portion 172a and the right battery frame portion 172b has a ladder shape including two upper and lower frames and a plurality of coupling frames coupling the two frames. The left battery frame portion 172a and the right battery frame portion 172b are spaced apart from each other in the left-right direction. The interval between the left battery frame portion 172a and the right battery frame portion 172b in the left-right direction is the same as the interval between the left frame 141a and the right frame 141b (see FIG. 8) of the upper frame portion 141 of the main frame 14 in the left-right direction. The front battery frame portion 172c couples a front end portion of the upper frame of the left battery frame portion 172a and a front end portion of the upper frame of the right battery frame portion 172b.

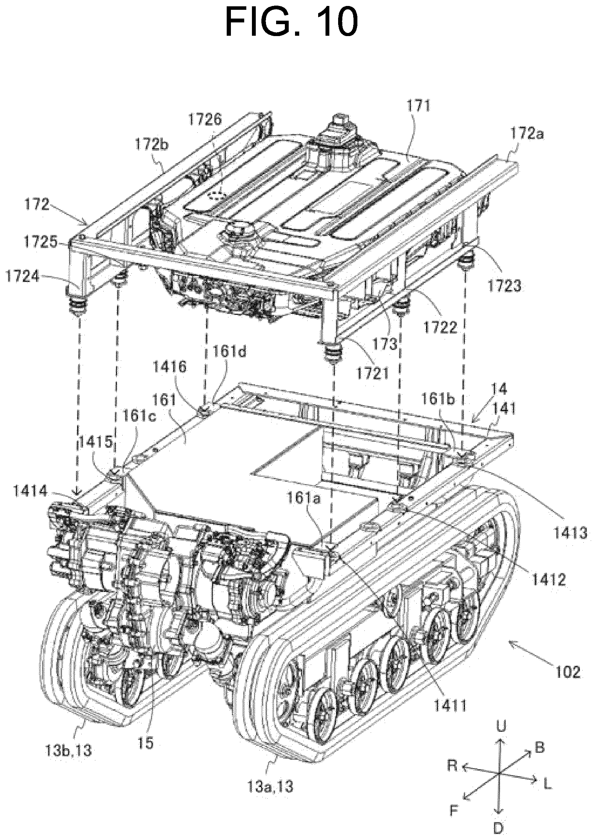

The battery 171 is disposed so as to be surrounded by the right battery frame portion 172b, the left battery frame portion 172a, and the front battery frame portion 172c. The battery 171 is attached to the battery frame 172 via at least one battery attachment piece 173 (see FIG. 10). The battery 171 may be attached to the battery frame 172 without using the battery attachment piece 173.

The battery 171 is attached to the main frame 14 via the battery frame 172. When the battery 171 is attached to the main frame 14 by using the battery frame 172, even if the shape of the battery 171 is changed, the battery 171 can be attached to the main frame 14 without changing the shape of the main frame 14.

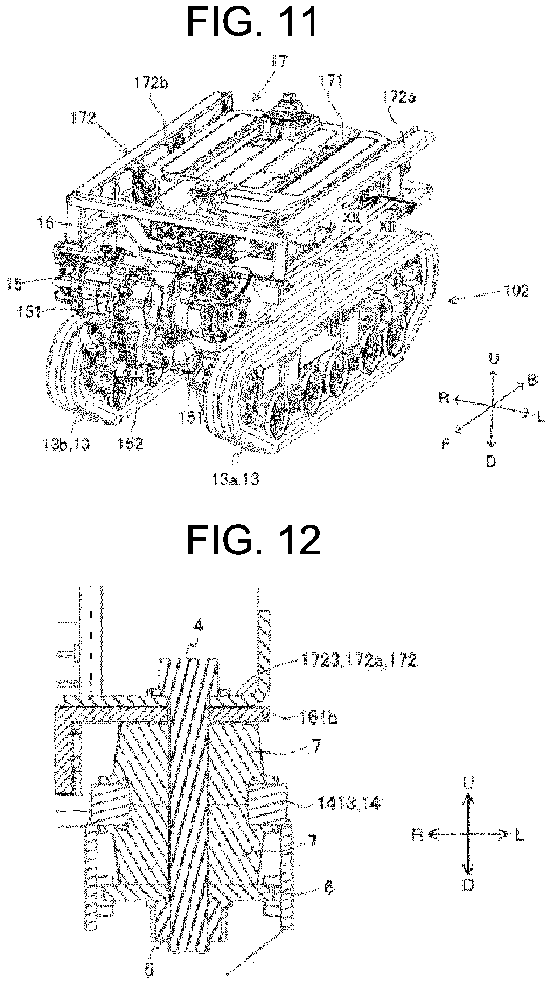

FIGs. 10 and 11 are views for explaining a structure of attaching the battery unit 17 to the chassis 102. FIG. 10 illustrates a state before the battery unit 17 is attached to the chassis 102. FIG. 11 illustrates a state where the battery unit 17 is attached to the chassis 102. In FIGs. 10 and 11, the power electronics unit 16 is already mounted on the chassis 102.

On the left side surface of the battery frame 172, a first attachment location 1721, a second attachment location 1722, and a third attachment location 1723 are provided on the lower frame of the left battery frame portion 172a in this order from the front side to the rear side at intervals. Further, on the right side surface of the battery frame 172, a fourth attachment location 1724, a fifth attachment location 1725, and a sixth attachment location 1726 are provided on the lower frame of the right battery frame portion 172b in this order from the front side to the rear side at intervals.

When the battery unit 17 is attached to the chassis 102, the six attachment portions 1411 to 1416 provided on the upper frame portion 141 of the main frame 14 described above are used. Specifically, the first attachment location 1721 and the first attachment portion 1411 are overlapped with each other in the up-down direction and attached. The second attachment location 1722 and the second attachment portion 1412 are overlapped with each other in the up-down direction and attached. The third attachment location 1723 and the third attachment portion 1413 are overlapped with each other in the up-down direction and attached. The fourth attachment location 1724 and the fourth attachment portion 1414 are overlapped with each other in the up-down direction and attached. The fifth attachment location 1725 and the fifth attachment portion 1415 are overlapped with each other in the up-down direction and attached. The sixth attachment location 1726 and the sixth attachment portion 1416 are overlapped with each other in the up-down direction and attached. In each of the attachment sets, attachment (fastening) is performed using a bolt, a nut, and an anti-vibration rubber with anti-vibration measures taken.

As described above, the first foot portion 161a is attached to the first attachment portion 1411.

For this reason, the first foot portion 161a and the first attachment location 1721 are stacked on the first attachment portion 1411 in this order from the lower side to the upper side, and the three stacked portions are fastened by using bolts or the like. Similarly, the second foot portion 161b is attached to the third attachment portion 1413. Therefore, the second foot portion 161b and the third attachment location 1723 are stacked on the third attachment portion 1413 in this order from the lower side to the upper side, and the three stacked portions are fastened by using bolts or the like. Further, a third foot portion 161c is attached to the fifth attachment portion 1415. Therefore, the third foot portion 161c and the fifth attachment location 1725 are stacked on the fifth attachment portion 1415 in this order from the lower side to the upper side, and the three stacked portions are fastened by using bolts or the like.

Further, a fourth foot portion 161d is attached to the sixth attachment portion 1416. Therefore, the fourth foot portion 161d and the sixth attachment location 1726 are stacked on the sixth attachment portion 1416 in this order from the lower side to the upper side, and the three stacked portions are fastened by using bolts or the like. That is, the storage box (power electronics unit) 161 is fastened to the main frame 14 together with the battery unit 17 in a state where anti-vibration measures are taken.

FIG. 12 is a schematic cross-sectional view illustrating a co-fastening structure of the storage box 161 and the battery unit 17 to the main frame 14. FIG. 12 is schematic cross-sectional view taken along line XII - XII illustrated in FIG. 11. Specifically, it is a co-fastening structure in the third attachment portion 1413 of the main frame 14. The co-fastening structure of other parts is the same as the structure illustrated in FIG. 12.

As illustrated in FIG. 12, the third attachment location 1723 (a part of the left battery frame portion 172a) and the second foot portion 161b (a part of the storage box 161), which are vertically overlapped with each other, are sandwiched between the head portion of a bolt 4 and an upper anti-vibration rubber 7 in the up-down direction. Further, the third attachment portion 1413 (a part of the main frame 14) is sandwiched between the upper anti-vibration rubber 7 and the lower anti-vibration rubber 7 in the up-down direction.

A portion of the bolt 4 on the side opposite to the head portion protrudes downward from the lower anti-vibration rubber 7, and a washer 6 and a nut 5 are attached to the protruding portion. When the bolt 4 and the nut 5 are fastened to each other in this state, the third attachment location 1723, the second foot portion 161b, and the third attachment portion 1413 are fastened to each other in a state where anti-vibration measures are taken by the anti-vibration rubber 7.

Although a portion corresponding to the second foot portion 161b illustrated in FIG. 12 is eliminated from a portion which is not fastened together (for example, a portion attached to the second attachment portion 1412), the other configuration is the same as the configuration illustrated in FIG. 12. In the above description, the number of co-fastening locations is four, but this number may be changed as appropriate. For example, co-fastening may be performed at all of the six fastening locations between the main frame 14 and the battery frame 172, or the number of co-fastening locations may be less than the four locations of the present embodiment.

As can be seen from the above description, the main frame 14 supports the battery 171 via an anti-vibration portion (a specific example is the anti-vibration rubber 7 illustrated in FIG. 12). The main frame 14 is a portion having high rigidity in the electric work vehicle 1. By attaching the battery 171 to such a place via the anti-vibration portion, the battery 171 can be made less likely to be affected by vehicle vibration, and the possibility of occurrence of a failure in the battery 171 can be reduced.

Further, the main frame 14 further supports at least one power electronics component (included in the power electronics unit 16). By supporting the battery 171 and the power electronic component by the same frame, a support structure for a plurality of components can be shared. In addition, in the present embodiment, the battery 171 and at least one power electronic component are attached to the main frame 14 by using the same member. Specifically, "using the same member" means "using the same bolt 4, nut 5, and anti-vibration rubber 7". In other words, the battery 171 and the at least one power electronic component are co-fastened to the main frame 14. With such a configuration, it is possible to prevent the battery 171 and the power electronic component from separately moving with respect to vehicle vibration.

Specifically, since the battery unit 17 and the storage box (power electronics unit) 161 are co-fastened in an anti-vibration state using the same bolt 4 or the like, it is possible to suppress the occurrence of relative movement between these. As a result, the harness connecting the battery 171 and the storage box 161 can be prevented from being bent, and a large load can be prevented from being applied to the connector portion, and therefore the reliability of the electric work vehicle 1 for power electronics system can be improved.

Further, as illustrated in FIG. 11 and the like, the main frame 14 supported by the travel unit 13 supports the battery 171 and the electric motor 151. Since the travel unit 13, the battery 171, and the electric motor 151 are attached to the same frame, components for support can be shared, and the electric work vehicle 1 can be made compact.

Further, as illustrated in FIGs. 11 and 4, the electric motor 151 and the drive transmission unit 152 are disposed on one side of the battery 171. With such a configuration, the electric motor 151 and the drive transmission unit 152 can be disposed close to each other. As a result, the drive system mounted on the electric work vehicle 1 can be made compact.

In addition, as illustrated in FIG. 4 and the like, the electric motor 151 is disposed on the one side with respect to an end portion of the drive transmission unit 152 on the side (the other side) opposite to the one side. With such a configuration, a clearance is formed between the electric motor 151 and the battery 171 on the other side of the electric motor 151, and a space for placing a component such as a frame member can be formed. The end portion on the other side of the drive transmission unit 152 corresponds to the above-described lower attachment portions 153a and 153b (see also FIG. 6).

Specifically, the one side is the front side of the vehicle. That is, the electric motor 151 and the drive transmission unit 152 are disposed on the front side of the battery 171. The electric motor 151 is disposed on the front side of the rear end portion (the lower attachment portions 153a and 153b) of the drive transmission unit 152. Further, the electric work vehicle 1 includes a work implement 3 disposed behind the battery 171 (see FIG. 1 and FIG. 4). Therefore, in the electric work vehicle 1, the electric motor 151 and the drive transmission unit 152, and the work implement 3 are disposed on opposite sides in the front-rear direction with the battery 171 interposed therebetween. As a result, it is possible to balance the electric work vehicle 1 in the front-rear direction by disposing heavy objects in the front portion and the rear portion of the electric work vehicle 1.

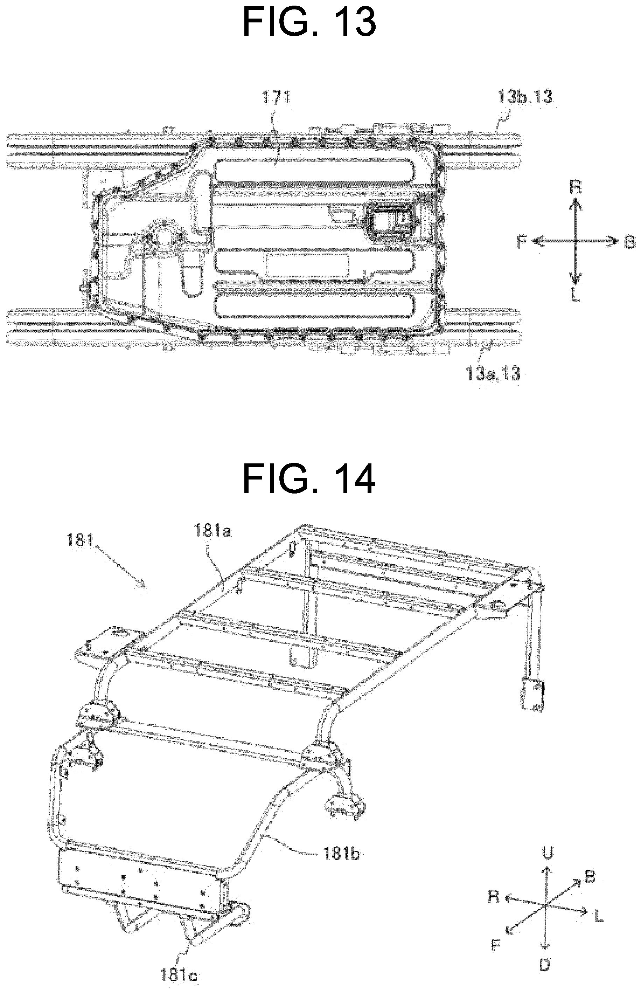

FIG. 13 is a schematic plan view illustrating a relation between the travel unit 13 and the battery 171. The battery 171 illustrated in FIG. 13 does not include the battery attachment piece 173 (see FIG. 10) to be attached to the battery frame 172. As illustrated in FIG. 13, the battery 171 is disposed further inside than left and right end portions of the travel unit 13. Specifically, the left end portion of the battery 171 is positioned further to the right than the left end portion of the left crawler 13a. The right end portion of the battery 171 is positioned further to the left than the right end portion of the right crawler 13b. With such a configuration, the amount of protrusion of the upper portion of the electric work vehicle 1 outward in the left-right direction with respect to the travel unit 13 can be reduced, and the possibility of collision with an obstacle present on the side of the electric work vehicle 1 can be reduced.

In the present embodiment, the battery unit 17 protrudes outward in the left-right direction on both left and right sides with respect to the travel unit 13. However, this is merely an example, and the battery unit 17 may be disposed inside the left and right end portions of the travel unit 13. With such a configuration, it is possible to reduce the possibility that the upper portion of the electric work vehicle 1 collides with an obstacle present on the side of the electric work vehicle 1.

### [2-6. Electrical Component Disposition Frame Portion]

As illustrated in FIG. 3, the electrical component disposition frame portion 18 includes a subframe 181. In other words, the electric work vehicle 1 includes the subframe 181 disposed above the main frame 14. The subframe 181 supports various electrical components 182 disposed in an upper portion of the electric work vehicle 1. The electrical component 182 is, in detail, an electric component driven by a low voltage (for example, 12 V).

Electric power is supplied from the battery 171 to the electrical components 182 via a DC-DC converter (not illustrated) included in the power electronics unit 16 and a low-voltage harness 183, which is a harness for low voltage. The low-voltage harness 183 is also supported by the subframe 181. Specifically, not all of the low-voltage harness 183 is disposed in the subframe 181. In the low-voltage harness 183, a harness serving as a main line is disposed on the chassis 102 side, and a harness formed by bundling auxiliary lines connected to the electrical component 182 disposed on the upper portion of the vehicle is supported by the subframe 181.

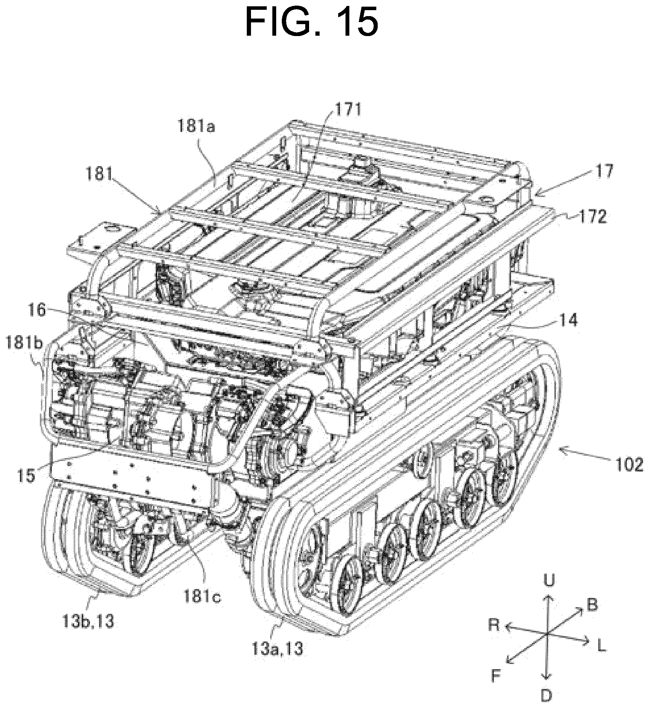

FIG. 14 is a perspective view illustrating a schematic configuration of the subframe 181. FIG. 15 is a schematic perspective view illustrating a state where the subframe 181 is attached to the chassis 102. In FIG. 15, the power electronics unit 16 and the battery unit 17 are attached to the chassis 102.

The subframe 181 is fixed to the chassis 102. At least a portion of the subframe 181 is disposed above the battery 171 and the electric motor 151. Specifically, the subframe 181 is attached to the chassis 102 so as to surround the chassis 102 from the front side to the upper side. In other words, the subframe 181 is attached to the chassis 102 so as to surround the travel drive device 15, the power electronics unit 16, and the battery unit 17.

The front and upper sides of the electric work vehicle 1 are places where a load is first received at the time of a collision or a fall.

Since the subframe 181 is provided at such a position, it is possible to guard the battery 171, the electric motor 151, and the power electronics unit 16 from direct application of an external force at the time of a collision or a fall. Although there is a possibility that the subframe 181 is damaged by the guard, even in such a case, it is sufficient to replace the frame which is an inexpensive component, and the maintainability can be improved.

In the present embodiment, the subframe 181 is covered with an exterior cover 12 (see FIG. 2 and the like) from above. However, this is an example. At least a portion of the subframe 181 may be disposed outside the exterior cover 12. For example, the upper portion of the subframe 181 may be configured to protrude to the outside of the exterior cover 12, and the subframe 181 may be used as a loading platform when materials are transported. Thus, the convenience of the electric work vehicle 1 can be improved.

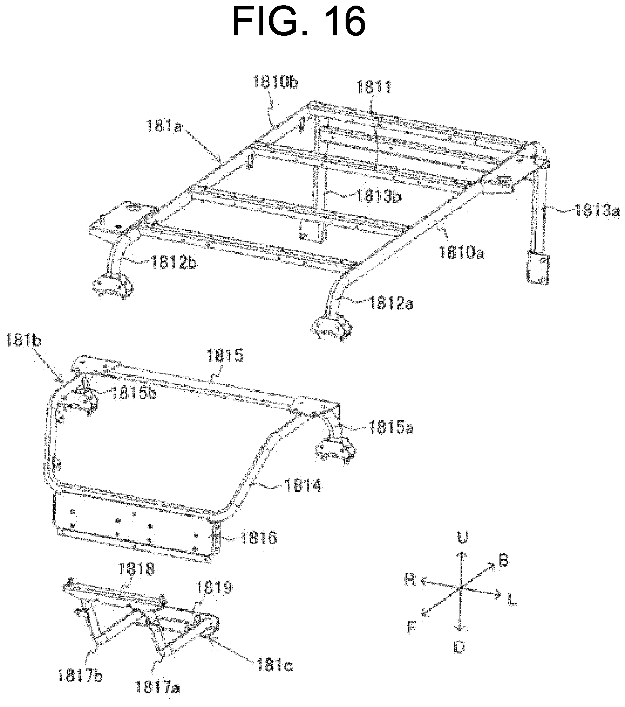

The subframe 181 has a divided structure (dividable structure). FIG. 16 is a diagram illustrating a divided structure of the subframe 181. As illustrated in FIG. 16, the subframe 181 can be divided into a vehicle upper frame portion 181a, a vehicle front frame portion 181b, and a vehicle lower frame portion 181c.

The vehicle upper frame portion 181a includes a pair of upper main frames 1810a and 1810b which are spaced apart from each other in the left-right direction and extend in the front-rear direction. The pair of upper main frames 1810a and 1810b are coupled by a plurality of upper coupling frames 1811 extending in the left-right direction. Upper front frames 1812a and 1812b extending downward are provided at the respective front ends of the pair of upper main frames 1810a and 1810b. Upper rear frames 1813a and 1813b extending downward are provided at the respective rear ends of the pair of upper main frames 1810a and 1810b.

The vehicle front frame portion 181b includes a front main frame 1814 which is a U-shaped frame extending obliquely rearward and which is bent at an intermediate portion to form a portion extending horizontally rearward.

The left and right rear ends of the front main frame 1814 are provided with an intermediate coupling frame 1815 that couples the left and right rear ends. The left and right end portions of the intermediate coupling frame 1815 are provided with intermediate coupling frame extending portions 1815a and 1815b which are bent downward. Further, a rectangular front plate portion 1816 spreading downward is provided on a lower edge portion extending in the left and right of the front main frame 1814.

The vehicle lower frame portion 181c includes a pair of left and right lower main frames 1817a and 1817b which are L-shaped in a side view. Front end portions of the pair of lower main frames 1817a and 1817b are provided with a lower first coupling frame 1818 extending in the left-right direction and coupling both lower main frames 1817a and 1817b. Rear end portions of the pair of lower main frames 1817a and 1817b are provided with a lower second coupling frame 1819 extending in the left-right direction and coupling both lower main frames 1817a and 1817b.

The left and right upper front frames 1812a and 1812b are fastened to the intermediate coupling frame 1815 with the use of a fastener (for example, a bolt and a nut), whereby the vehicle upper frame portion 181a and the vehicle front frame portion 181b are coupled to each other. The front plate portion 1816 is fastened to the lower first coupling frame 1818 with the use of a fastener, whereby the vehicle front frame portion 181b and the vehicle lower frame portion 181c are coupled to each other.

Further, the subframe 181 formed by integrating the three frame portions 181a to 181c is attached to the main frame 14. Specifically, the lower end portions of the left and right upper rear frames 1813a and 1813b are fastened to the rear end surface of the upper frame portion 141 (see FIG. 3) of the main frame 14 with the use of a fastener. Further, the left and right intermediate coupling frame extending portions 1815a and 1815b are fastened to the upper surface of the front end portion of the main frame 14 with the use of a fastener. Furthermore, the lower second coupling frame 1819 is fastened to the front end surface of the lower frame portion 142 (see FIG. 3) of the main frame 14 with the use of a fastener.

When the subframe 181 has a divided structure as in the present embodiment, a method of disassembling the subframe 181 can be selected according to a portion to be maintained, and workability at the time of maintenance can be improved. For example, in a case where maintenance of the battery 171 is desired, the vehicle upper frame portion 181a may be disassembled, and thus an operator can easily access the battery 171.

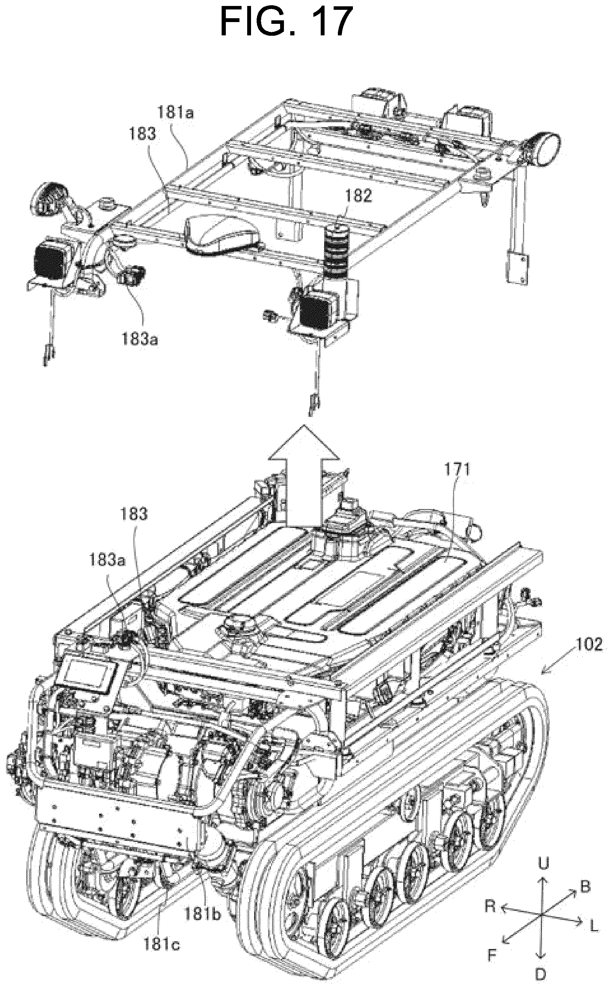

FIG. 17 is a diagram for explaining an example of disassembly of the electric work vehicle 1 at the time of maintenance such as replacement of the battery 171. In FIG. 17, the exterior cover 12 has already been removed. As illustrated in FIG. 17, at the time of maintenance of the battery 171, the electrical component 182 and the low-voltage harness 183 attached to the vehicle upper frame portion 181a are also removed from the chassis 102 together with the vehicle upper frame portion 181a of the subframe 181.

The low-voltage harness 183 is provided with a connector 183a in accordance with the dividable position of the subframe 181. In accordance with the disassembly (division) of the subframe 181, the connector 183a is removed at a necessary location. When the vehicle upper frame portion 181a is removed, the connector 183a disposed in the vicinity of the vehicle upper frame portion 181a and the vehicle front frame portion 181b is removed. Thus, the low-voltage harness 183 attached to the vehicle upper frame portion 181a and the low-voltage harness 183 fixed to the main frame 14 or the vehicle front frame portion 181b can be easily separated from each other.

In the present embodiment, the battery unit 17 is configured to be disposed in an upper portion of the electric work vehicle 1. Therefore, the battery 171 can be easily accessed only by removing the vehicle upper frame portion 181a (including the electrical components and the low-voltage harness). Consequently, if the battery 171 for replacement is prepared, continuous work can be performed with less time loss without increasing the number of vehicles.

### [2-7. Hydraulic Device (Hydraulic System)]

The electric work vehicle 1 includes a hydraulic device 19 constituting a hydraulic system in a portion indicated by a broken line frame in FIG. 4 or in the vicinity thereof. The hydraulic device 19 is a device for raising and lowering the work implement 3. The elements constituting the hydraulic device 19 are disposed in a concentrated manner at the rear portion of the electric work vehicle 1 where the work implement 3 is provided. With such a configuration, the oil passage can be shortened, and energy loss can be reduced. As a result, extra power consumption can be suppressed, and the time during which the electric work vehicle 1 can work can be extended.

The hydraulic device 19 includes at least a hydraulic cylinder and a hydraulic pump. The hydraulic pump is configured to be driven by a motor. Preferably, the hydraulic device 19 further includes a valve block having a relief valve. In addition, the hydraulic device 19 preferably further includes a control valve. Moreover, the hydraulic device 19 preferably further includes a pipe (hydraulic pipe) through which oil flows.

In the present embodiment, the hydraulic device 19 is disposed between the battery 171 and the travel unit 13 and behind the power electronics component (power electronics unit 16). Further, the hydraulic device 19 is disposed below the electric motor of the work implement drive device 111. With such a configuration, electric components such as a power electronic component, a battery, and an electric motor are not disposed below the hydraulic device 19. As a result, even if the oil leaks due to a failure of the hydraulic device 19, it is possible to reduce the possibility that the leaked oil adheres to the electric components. Since it is possible to reduce the possibility of occurrence of a failure of an electric component due to adhesion of oil, it is possible to reduce the possibility of occurrence of a fatal failure such as inability to travel.

In the travel unit 13 constituted by the left and right crawlers 13a and 13b, a clearance is formed between the left and right crawlers 13a and 13b. A part of the hydraulic device 19 may enter the clearance. Even in such a case, when a part of the hydraulic device 19 is present between the lower end of the battery 171 and the upper end of the travel unit 13 in the up-down direction, the hydraulic device 19 is considered to be present between the battery 171 and the travel unit 13.

### <3. Details of Travel Drive Device>

Next, the travel drive device 15 of the electric work vehicle 1 will be described in detail.

### [3-1. Configuration of Travel Drive Device]

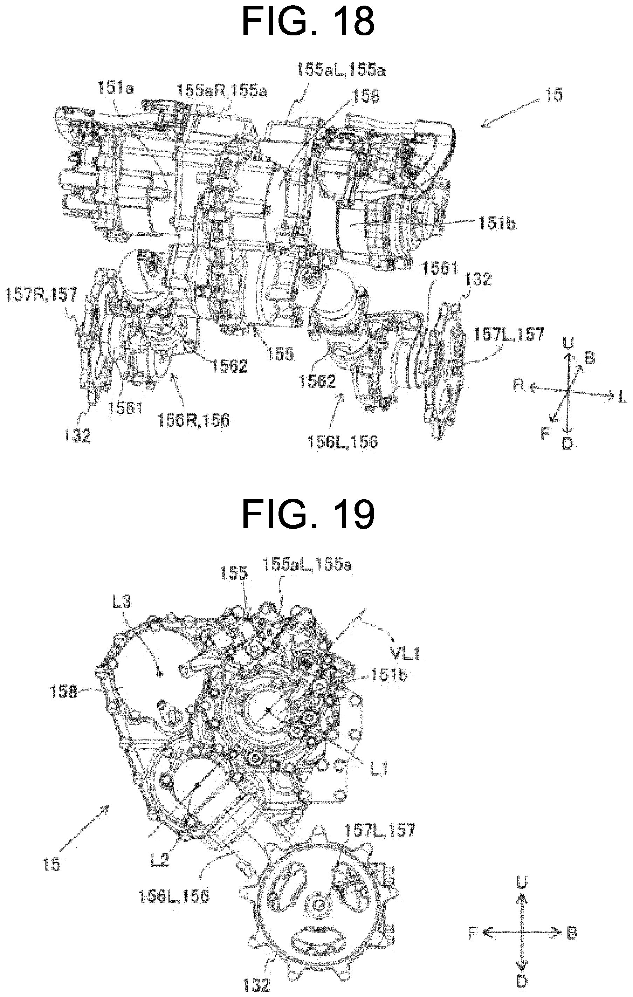

FIG. 18 is a perspective view illustrating a schematic configuration of the travel drive device 15. FIG. 19 is a side view illustrating a schematic configuration of the travel drive device 15. As illustrated in FIGs. 18 and 19, the travel drive device 15 includes a traveling electric motor 151a, a turning electric motor 151b, a speed reducer 155, a coupling portion 156, an output end portion 157, and a brake unit 158.

The traveling electric motor 151a and the turning electric motor 151b are included in the above-described electric motor 151. Further, the speed reducer 155, the coupling portion 156, and the output end portion 157 are included in the above-described drive transmission unit 152. Furthermore, although the drive sprocket 132 is also illustrated in FIGs. 18 and 19, the drive sprocket 132 is a component of the travel unit 13 in the present embodiment. However, the drive sprocket 132 may also be regarded as a component of the travel drive device 15.

The traveling electric motor 151a generates traveling power. Specifically, the traveling power generated by the driving of the traveling electric motor 151a is transmitted to the output end portion 157 via the speed reducer 155 and the power transmission elements included in the coupling portion 156. Details in this respect will be described below. Further, the electric power source of the traveling electric motor 151a is the above-described battery 171 (see FIG. 3 and the like). Specifically, the traveling electric motor 151a is supplied with electric power from the battery 171 via an inverter (not illustrated) included in the power electronics unit 16.

The turning electric motor 151b generates turning power. Specifically, the turning power generated by the driving of the turning electric motor 151b is transmitted to the output end portion 157 via the speed reducer 155 and the power transmission elements included in the coupling portion 156. Details in this respect will be described below. Further, the electric power source of the turning electric motor 151b is the above-described battery 171. Specifically, the turning electric motor 151b is supplied with electric power from the battery 171 via an inverter (not illustrated) included in the power electronics unit 16.

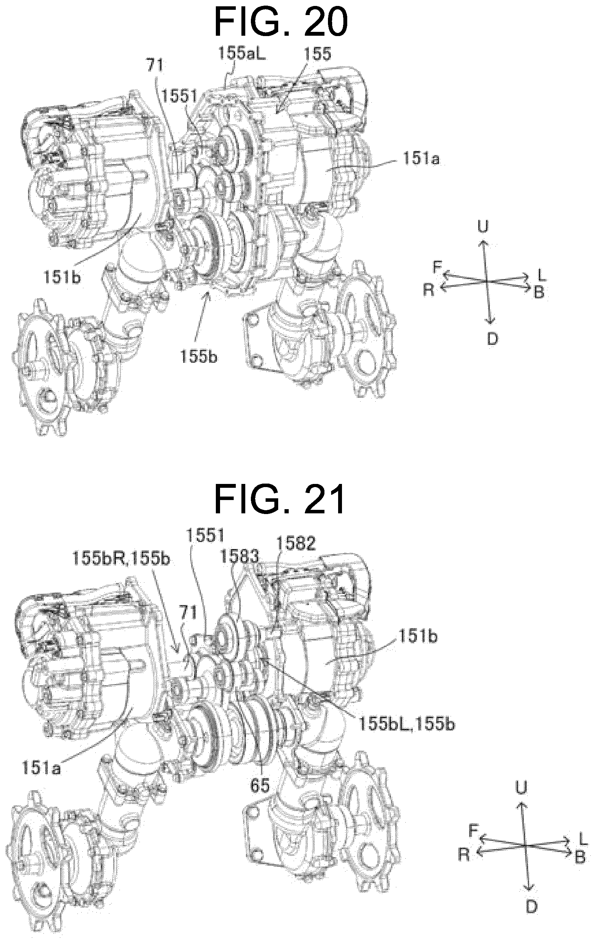

The speed reducer 155 is coupled to the traveling electric motor 151a and the turning electric motor 151b. The speed reducer 155 includes a case 155a and a speed reduction mechanism 155b (see FIG. 20 and the like) provided inside the case 155a. That is, the travel drive device 15 includes a speed reduction mechanism 155b. Specifically, the case 155a includes a left case 155aL disposed on the left side and a right case 155aR disposed on the right side. The above-described pair of upper attachment portions 154a and 154b (see FIG. 6) are provided separately on the left case 155aL and the right case 155aR.

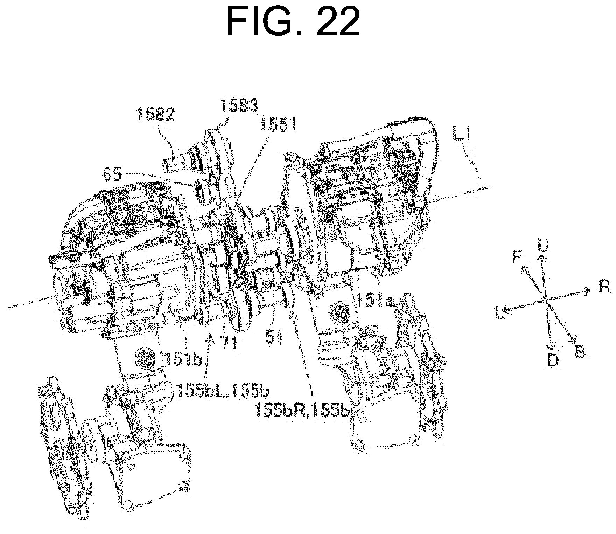

FIG. 20 is a perspective view illustrating a schematic configuration of the travel drive device 15 from which the right case 155aR is removed. FIG. 21 is a perspective view illustrating a schematic configuration of the travel drive device 15 from which the case 155a is removed. FIG. 21 is a view seen from the same direction as FIG. 20. FIG. 22 is a schematic perspective view of the travel drive device 15 from which the case 155a is removed as viewed from a direction different from FIG. 21.

As illustrated in FIGs. 20 to 22, the speed reduction mechanism 155b includes a left speed reduction mechanism 155bL disposed on the left side and a right speed reduction mechanism 155bR disposed on the right side. In the present embodiment, the right speed reduction mechanism 155bR is a speed reduction mechanism of the traveling electric motor 151a, and the left speed reduction mechanism 155bL is a speed reduction mechanism of the turning electric motor 151b. However, the left and right positions of the traveling electric motor 151a and the turning electric motor 151b may be switched, and the positions of the left and right speed reduction mechanisms 155bL and 155bR may also be switched in accordance with the switching. As will be described below, the left speed reduction mechanism 155bL and the right speed reduction mechanism 155bR share a final output shaft, and outputs of both mechanisms 155bL and 155bR are integrated and output.

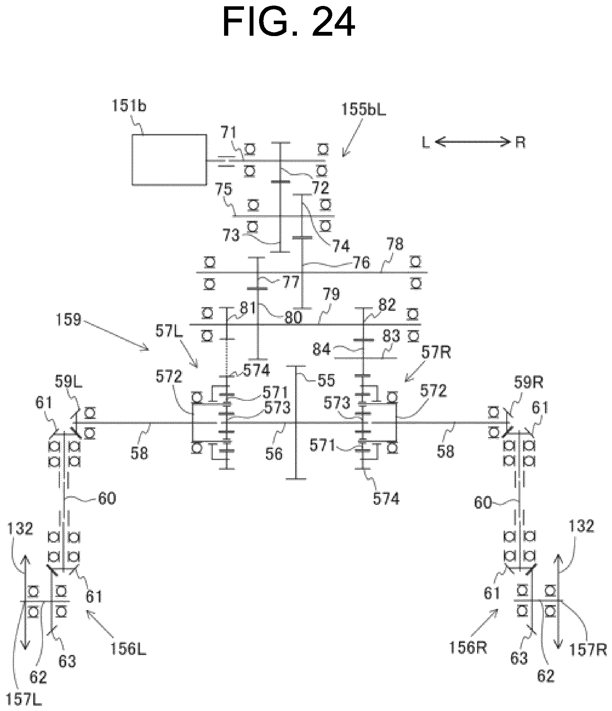

Each of the speed reduction mechanisms 155bL and 155bR includes a plurality of power transmission elements. The power transmission elements particularly include a gear. The power transmission elements may include a chain or a belt in addition to the gear. The configuration of each of the speed reduction mechanisms 155bL and 155bR will be described in detail below. Further, in the present embodiment, the travel drive device 15 includes a differential mechanism 159 (see FIG. 24) that operates in conjunction with the turning electric motor 151b. The differential mechanism 159 is also included in the case side 155a, which will also be described below.

The coupling portion 156 couples the speed reduction mechanism 155b and the output end portion 157 in a power transmittable manner. Specifically, the coupling portion 156 includes a left coupling portion 156L disposed on the left side and a right coupling portion 156R disposed on the right side. That is, the output of the speed reduction mechanism 155b is taken out to the outside from two left and right locations. Each of the coupling portions 156L and 156R includes a plurality of power transmission elements, which will be described in detail below.

The output end portion 157 is a portion that outputs the driving force of the traveling electric motor 151a and the turning electric motor 151b to the outside of the own device 15. Since the coupling portion 156 has the left and right coupling portions 156L and 156R, the output end portion 157 also has left and right output end portions 157L and 157R. In the present embodiment, the left output end portion 157L is constituted by a part of the left coupling portion 156L.

The right output end portion 157R is constituted by a part of the right coupling portion 156R. Details in this respect will be described below.

The brake unit 158 brakes the power transmission elements included in the speed reduction mechanism 155b. The brake is a brake for maintaining the stopped state of the stopped electric work vehicle 1. That is, the brake is a parking brake. Specifically, the brake is a brake for maintaining the stopped state of the vehicle when the vehicle is stopped on a slope. Specifically, the brake unit 158 brakes the power transmission elements of the right speed reduction mechanism 155bR provided corresponding to the traveling electric motor 151a. A detailed brake mechanism for operating the brake unit 158 will be described below.

### [3-2. Details of Power Transmission]

Next, power transmission in the travel drive device 15 will be described in detail.

FIG. 23 is a power transmission system diagram of a traveling system. FIG. 24 is a power transmission system diagram of a turning system. As illustrated in FIGs. 23 and 24, the power transmission systems of the traveling system and the turning system commonly include a pair of left and right planetary transmission mechanisms 57L and 57R. As will be understood from the following description, the left and right planetary transmission mechanisms 57L and 57R constitute the differential mechanism 159 that operates in conjunction with the turning electric motor 151b.

The left and right planetary transmission mechanisms 57L and 57R are disposed symmetrically with respect to a sun shaft 56. Each of the left and right planetary transmission mechanisms 57L and 57R has a plurality of (for example, three) planetary gears 571.

In the left planetary transmission mechanism 57L, each of the plurality of planetary gears 571 is rotatably supported by a planetary carrier 572 disposed on the left side. In the right planetary transmission mechanism 57R, each of the plurality of planetary gears 571 is rotatably supported by a planetary carrier 572 disposed on the right side. In each planetary transmission mechanism 57L and 57R, the plurality of planetary gears 571 are positioned with the same radius around the sun shaft 56 and are disposed so as to mesh with sun gears 573 fixed to both left and right ends of the sun shaft 56, respectively.

In the left and right planetary transmission mechanisms 57 L and 57R, ring gears 574 are disposed concentrically with the above sun shaft 56, respectively. Each ring gear 574 has internal teeth on its inner peripheral surface and external teeth on its outer peripheral surface. Each ring gear 574 is disposed in such a manner that internal teeth thereof mesh with the plurality of planetary gears 571.

Each ring gear 574 is rotatably supported via a bearing on the sun shaft 56 or on the center shaft 58 protruding outward in the left-right direction from the planetary carrier 572.

As illustrated in FIG. 23, the rotational power of the first motor shaft 51 protruding from the traveling electric motor 151a is transmitted from the output gear 52 of the first motor shaft 51 to a center gear 55 fixed to the sun shaft 56 via transmission gears 53 and 54. The rotational power transmitted to the center gear 55 is transmitted to a pair of left and right planetary transmission mechanisms 57L and 57R.

The rotational power transmitted to the left planetary transmission mechanism 57L is transmitted to the left bevel gear 59L fixed to the left end portion of the center shaft 58 of the planetary carrier 572 via the planetary carrier 572. Similarly, the rotational power transmitted to the right planetary transmission mechanism 57R is transmitted to the right bevel gear 59R fixed to the right end portion of the center shaft 58 of the planetary carrier 572 via the planetary carrier 572. The center shaft 58 of the planetary carrier 572 corresponds to an output shaft of the speed reducer 155 (a differential mechanism 159 of the speed reducer 155).

The rotational power transmitted to the left bevel gear 59L is transmitted to a relay shaft 60 which is included in the left coupling portion 156L and has bevel gears 61 fixed to both end portions thereof. The rotational power transmitted to the relay shaft 60 is transmitted to an external output shaft 62 having a bevel gear 63 fixed to one end portion (right end portion) thereof. The other end portion (left end portion) of the external output shaft 62 constitutes the left output end portion 157L, and the left drive sprocket 132 is attached to this portion.

Similarly, the rotational power transmitted to the right bevel gear 59R is transmitted to the relay shaft 60 which is included in the right coupling portion 156R and has bevel gears 61 fixed to both end portions thereof. The rotational power transmitted to the relay shaft 60 is transmitted to the external output shaft 62 having the bevel gear 63 fixed to one end portion (left end portion) thereof. The other end portion (right end portion) of the external output shaft 62 constitutes a right output end portion 157R, and the right drive sprocket 132 is attached to this portion.

As illustrated in FIG. 24, the rotational power of the second motor shaft 71 protruding from the turning electric motor 151b is transmitted from the output gear 72 of the second motor shaft 71 to a center gear 80 fixed to a steering shaft 79 via a pair of transmission gears 73 and 74 fixed to a first intermediate shaft 75 and a pair of transmission gears 76 and 77 fixed to a second intermediate shaft 78. The rotational power transmitted to the steering shaft 79 via the center gear 80 is transmitted to a pair of left and right planetary transmission mechanisms 57L and 57R that constitute the differential mechanism 159.

The transmission gear 81 attached to the left end portion side of the steering shaft 79 meshes with the external teeth of the ring gear 574 of the left planetary transmission mechanism 57L. Therefore, the rotational power transmitted to the steering shaft 79 is directly transmitted to the ring gear 574 of the left planetary transmission mechanism 57L. Meanwhile, the transmission gear 82 attached to the right end portion side of the steering shaft 79 meshes with the reverse gear 84 attached to the reverse rotation shaft 83, and the reverse gear 84 meshes with the external teeth of the ring gear 574 of the right planetary transmission mechanism 57R. Therefore, the rotational power transmitted to the steering shaft 79 is transmitted to the ring gear 574 of the right planetary transmission mechanism 57R after the rotational direction is reversed by the reverse gear.

For example, in a state where the rotation of the traveling electric motor 151a is stopped, the sun shaft 56 and the sun gears 573 on both left and right sides are fixed. Therefore, the left and right ring gears 574 rotate at the same rotational speed in mutually opposite directions during forward rotation (or reverse rotation) of the turning electric motor 151b. Here, it is assumed that the left ring gear 574 rotates in the forward direction and the right ring gear 574 rotates in the reverse direction. In this case, the planetary gear 571 and the planetary carrier 572 on the left side rotate forward about the sun shaft 56, while the planetary gear 571 and the planetary carrier 572 on the right side rotate backward about the sun shaft 56. Accordingly, the external output shaft 62 to which the rotational power is transmitted from the center shaft 58 of the planetary carrier 572 on the left side via the relay shaft 60 rotates forward, and the external output shaft 62 to which the rotational power is transmitted from the center shaft 58 of the planetary carrier 572 on the right side via the relay shaft 60 rotates backward. Consequently, the left crawler 13a moves forward and the right crawler 13b moves backward. In this case, the electric work vehicle 1 spins and turns to the right on the spot.

On the other hand, when the traveling electric motor 151a is rotated, as described above, the rotational power of the traveling electric motor 151a is transmitted to the sun shaft 56. If the rotation of the turning electric motor 151b is stopped, the rotations of the ring gears 574 on both the left and right sides are stopped, and the ring gears are in a fixed state. Accordingly, the rotational power transmitted to the sun shaft 56 is equally transmitted to the left external output shaft 62 (left output end portion 157L) and the right external output shaft 62 (right output end portion 157R) via the left and right planetary transmission mechanisms 57L and 57R. Thus, the left and right drive sprockets 132 rotate in the same rotational direction at the same rotational speed, and the electric work vehicle 1 travels straight. That is, the electric work vehicle 1 moves forward or backward in accordance with the rotational direction of the traveling electric motor 151a.

On the basis of the above-described principle, the rotational speeds and rotational directions of the traveling electric motor 151a and the turning electric motor 151b are appropriately combined and controlled, whereby the electric work vehicle 1 can be turned while traveling. The rotational speeds and rotational directions of the traveling electric motor 151a and the turning electric motor 151b can be adjusted by operating an operation unit constituted by a lever or the like of the remote operation device 2 (see FIG. 1).

Here, the brake unit 158 will be described in detail with reference to FIG. 23. As illustrated in FIG. 23, the brake unit 158 is constituted by an electromagnetic brake. Specifically, the brake unit 158 includes an electromagnetic portion 1581, a brake shaft 1582, and a brake gear 1583 fixed to the brake shaft 1582.

The electromagnetic portion 1581 switches between a state where the brake is applied to a rotor 1581a that rotates together with the brake shaft 1582 and a state where the brake is not applied. When a brake is applied to the rotor 1581a, the brake shaft 1582 and the brake gear 1583 cannot rotate. When the brake gear 1583 becomes unrotatable, the transmission gear 53, which is a power transmission element of the above-described traveling system coupled to the brake gear 1583 via the intermediate gear 65, also becomes unrotatable. As a result, the left and right external output shafts 62, which are connected to the transmission gear 53 via the plurality of power transmission elements, cannot rotate, and the stopped state of the stopped (parked) electric work vehicle 1 is maintained. On the other hand, when the brake is not applied to the rotor 1581a, the transmission gear 53 can freely rotate, and thus the brake unit 158 does not apply the brake to the traveling system of the electric work vehicle 1.

In the present embodiment, the brake is not applied to the rotor 1581a when the electromagnetic portion 1581 is energized, and the brake is applied to the rotor 1581a when the energization of the electromagnetic portion 1581 is interrupted. With such a configuration, when the electric work vehicle 1 is parked, the electric work vehicle 1 can be in a state where the brake is applied without being energized.

In addition, when a failure occurs in the electric system of the electric work vehicle 1 and the electric motor 151 does not operate, the electric work vehicle 1 can be safely stopped in a state where the brake is applied. However, contrary to the configuration of the present embodiment, a configuration may be adopted in which the brake is applied to the rotor 1581a when the electromagnetic portion 1581 is energized, and the brake is not applied to the rotor 1581a when the energization of the electromagnetic portion 1581 is interrupted.

Further, in the present embodiment, the intermediate gear 65 is configured to mesh with the transmission gear 53. However, as long as the rotation of the traveling system can be stopped, the gear with which the intermediate gear 65 meshes may be a gear fixed to another shaft. For example, the intermediate gear 65 may be configured to mesh with a gear fixed to the sun shaft 56. However, a configuration in which the gear meshes with a gear (with small torque) fixed to a shaft disposed upstream of the speed reduction mechanism 155b is preferable because a brake can be applied with a small force.

As can be seen from the above, in the present embodiment, the intermediate gear 65 is disposed between the power transmission elements of the speed reduction mechanism 155b and the brake unit 158. Specifically, the intermediate gear 65 is disposed between the power transmission element (the gear 53) of the right speed reduction mechanism (the speed reduction mechanism for the traveling system) 155bR and the brake gear 1583 of the brake unit 158.

If a brake mechanism that maintains the stopped state of the electric work vehicle 1 is to be configured without using the intermediate gear 65, it is necessary to dispose the brake mechanism at an end portion of any shaft that performs power transmission of the traveling system. In this case, it is necessary to dispose the brake mechanism so as to avoid the disposition area of the left and right electric motors 151a and 151b, and by providing the brake mechanism, the travel drive device is likely to increase in size. In this regard, with the configuration in which the intermediate gear 65 is provided as in the present embodiment, the brake mechanism can be configured with a small number of shafts with respect to the speed reduction mechanism 155b disposed between the left and right electric motors 151a and 151b. Therefore, the travel drive device 15 having the brake mechanism can be configured to be compact.

Further, if the left and right crawlers 13a and 13b are driven by separate electric motors, it is necessary to provide separate brake units (brake mechanisms) on the left and right output shafts (travel drive shafts). On the other hand, in the present embodiment, the number of the brake unit 158 may be one, and the configuration of the present embodiment can be said to be an advantageous configuration also in this respect.

### [3-3. Layout and the like of Each Part]

Next, a layout and the like of each part constituting the travel drive device 15 will be described.

As illustrated in FIG. 18, the speed reducer 155 is disposed between the traveling electric motor 151a and the turning electric motor 151b. In other words, the speed reduction mechanism 155b is disposed between the traveling electric motor 151a and the turning electric motor 151b (see also FIG. 21). By disposing the speed reduction mechanism 155b between the two electric motors 151a and 151b, components (elements) constituting the speed reduction mechanism 155b can be disposed in a concentrated manner near the two electric motors 151a and 151b. Therefore, the travel drive device 15 can be made compact.

Specifically, the traveling electric motor 151a and the turning electric motor 151b are arranged at an interval in the left-right direction. That is, the traveling electric motor 151a and the turning electric motor 151b are disposed so as to be distributed in the left-right direction with respect to the speed reduction mechanism 155b. Since the two electric motors 151a and 151b are arranged side by side in the left-right direction, the length of the travel drive device 15 in the front-rear direction can be reduced.

More specifically, as illustrated in FIG. 22 and the like, the first motor shaft 51 connected to the speed reduction mechanism 155b of the traveling electric motor 151a and the second motor shaft 71 connected to the speed reduction mechanism 155b of the turning electric motor 151b are disposed on the same axis line (on a first axis line L1). Specifically, the first motor shaft 51 and the second motor shaft 71 are disposed on the same axis line L1 extending in the left-right direction. Further, the first motor shaft 51 is, in detail, an output shaft of the traveling electric motor 151a, and is connected to the right speed reduction mechanism 155bR. The second motor shaft 71 is, in detail, an output shaft of the turning electric motor 151b, and is connected to the left speed reduction mechanism 155bL.

When the first motor shaft 51 and the second motor shaft 71 are disposed on the same axis line L1, the two motor shafts 51 and 71 can be supported by the same member in the speed reducer 155 disposed between the two electric motors 151a and 151b. Based on this point, in the present embodiment, as illustrated in FIGs. 20 to 22, the first motor shaft 51 and the second motor shaft 71 are rotatably held by a holding portion 1551 provided in the case 155a that covers the speed reduction mechanism 155b. The first motor shaft 51 and the second motor shaft 71 are rotatably held by the same (one) holding portion 1551. With such a configuration, it is possible to simplify the attachment structure of the output shafts of the two electric motors 151a and 151b.

Specifically, the holding portion 1551 configured as one member is disposed in the case 155a. The holding portion 1551 disposed in the case 155a may be attached to any of the left and right case 155aL and 155aR. In the present embodiment, as illustrated in FIG. 20, the holding portion 1551 is attached to the left case 155aL.

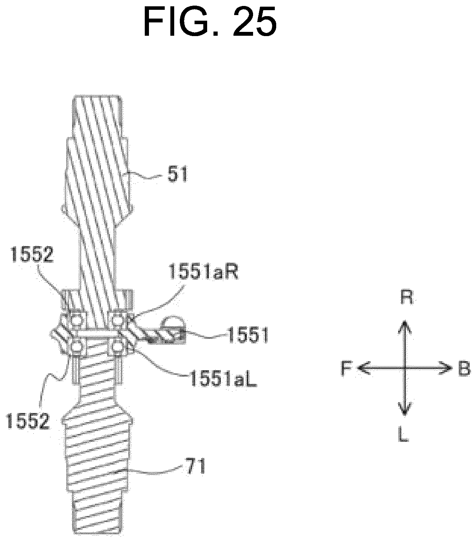

FIG. 25 is a schematic cross-sectional view illustrating a support structure of the two motor shafts 51 and 71 by the holding portion 1551. The holding portion 1551 has a left recessed portion 1551aL that is recessed rightward on the left side surface. Further, the holding portion 1551 has a right recessed portion 1551aR recessed leftward on the right side surface.

A bearing 1552 is disposed in the right recessed portion 1551aR to rotatably support a tip portion (left end portion) of the first motor shaft 51. Further, the bearing 1552 is disposed in the left recessed portion 1551aL to rotatably support a tip portion (right end portion) of the second motor shaft 71.

In the present embodiment, the travel drive device 15 is attached to the travel unit 13 and the main frame 14. As can be seen from the above description, the direction of attachment to these is the front-rear direction (see FIGs. 5 to 7). In the travel drive device 15 having such an attachment direction, the brake unit 158 is disposed on one side of the speed reduction mechanism 155b in the front-rear direction. With such a configuration, the brake unit 158 can be disposed near the speed reduction mechanism 155b by using the intermediate gear 65 as described above. As a result, the travel drive device 15 can be configured to be compact.

Specifically, as illustrated in FIG. 19, the brake unit 158 is positioned in front of the first axis line L1 of the traveling electric motor 151a and the turning electric motor 151b which are coaxial with each other. Further, the second axis line L2, which is the axis line of the output shaft of the differential mechanism 159, is positioned in front of the first axis line L1. With such a configuration, the electric work vehicle 1 can be configured in such a manner that the traveling electric motor 151a and the turning electric motor 151b are not located at the forefront. As a result, even if the electric work vehicle 1 collides with an obstacle, the electric motors 151a and 151b do not directly receive an external force. That is, even if the vehicle collides with an obstacle, the possibility of failure of the high-voltage electric motors 151a and 151b can be reduced. The second axis line L2 corresponds to the axis line of the above-described center shaft 58 (see FIG. 23).

Further, in the present embodiment, in the travel drive device 15 mounted on the electric work vehicle 1, the brake unit 158 is located at the foremost part. Therefore, even if the electric work vehicle 1 collides with an obstacle, it is possible to suppress the possibility that the electric motors 151a and 151b and the speed reducer 155 located behind the brake unit 158 fail. That is, even if the electric work vehicle 1 collides with an obstacle, it is possible to suppress the possibility of a fatal failure of the drive system of the electric work vehicle 1 to such an extent that the electric work vehicle 1 cannot travel.

Further, in the present embodiment, the first axis line L1, the second axis line L2, and a third axis line L3 (see FIG. 19), which is the axis line of the brake shaft 1582 of the brake unit 158, all extend in the left-right direction. As illustrated in FIG. 19, in a plan view (side view) from one side in the left-right direction, the third axis line L3 is positioned between the first axis line L1 and the second axis line L2 in a direction in which a virtual line VL1 connecting the first axis line L1 and the second axis line L2 extends. With such a configuration, the brake unit 158 can be prevented from protruding with respect to the two electric motors 151a and 151b and the differential mechanism 159, and the outer shape of the travel drive device 15 can be made compact.

Further, in the present embodiment, the height position of the output end portion 157 is lower than the second axis line L2 which is lower than the first axis line L1. This is achieved by forming the lower side of the travel drive device 15 in a gate shape. The gate shape is achieved by disposing the bevel gears 59L and 59R (see FIG. 23) at the left and right end portions of the output shaft (corresponding to the above-described center shaft 58) of the speed reduction mechanism 155b (differential mechanism 159) and providing left and right coupling portions 156L and 156R.

By forming the lower side of the travel drive device 15 in a gate shape, in the electric work vehicle 1, the height positions of the electric motors 151a and 151b can be made higher than the output end portion 157 to which the drive sprocket 132 is attached. Thus, in the present embodiment, the electric motors 151a and 151b are positioned higher than the crawlers 13a and 13b. As a result, the two electric motors 151a and 151b arranged side by side can be prevented from coming into contact with the crawlers 13a and 13b without widening the interval between the crawlers 13a and 13b in the left-right direction. Further, in a front view, the outer end portions of the left and right electric motors 151a and 151b in the left-right direction may be configured so as not to protrude outward in the left-right direction with respect to the crawlers 13a and 13b. As a result, the electric work vehicle 1 can be made compact. Further, the gate shape makes it easy to adjust the tread and the minimum ground clearance.

The coupling portion 156 (the left and right coupling portions 156L and 156R) specifically includes a first coupling portion 1561 and a second coupling portion 1562. The first coupling portion 1561 extends in the left-right direction, and has one end portion connected to the output end portion 157. Specifically, the first coupling portion 1561 includes above-described external output shaft 62 (see FIG. 23) extending in the left-right direction. In addition, an outer end portion of the external output shaft 62 in the left-right direction is directly connected to the output end portion 157. In other words, an outer end portion of the external output shaft 62 in the left-right direction constitutes the output end portion 157.

Further, the second coupling portion 1562 extends in a direction intersecting the left-right direction, and is connected to the speed reduction mechanism 155b and the first coupling portion 1561. The second coupling portion 1562 includes the above-described relay shaft 60 to which the bevel gears 61 are attached at the both end portions. The relay shaft 60 is, in detail, disposed in a direction orthogonal to the center shaft 58, which is the output shaft of the speed reduction mechanism 155b (differential mechanism 159), and the external output shaft 62. The relay shaft 60 is connected to the center shaft 58 and the external output shaft 62 in a power transmittable manner via the bevel gears 61 provided at both end portions of the relay shaft 60.

When the coupling portion 156 has such a configuration, the outputs of the speed reduction mechanism 155b (the differential mechanism 159) can be transmitted to the output end portion 157 in two directions. In addition, with such a two direction configuration, the lengths in the respective directions can be easily adjusted in accordance with the characteristics required for the electric work vehicle 1. For example, by adding a spacer or extending the shaft, expansion in the left-right direction (tread direction) or expansion in the height direction can be achieved.

### <4. Notes and the like>

The various technical features disclosed in the present specification can be modified in various ways without departing from the gist of the technical creation thereof. In addition, the plurality of embodiments and modifications described in the present specification may be combined to the extent possible.

### <5. Supplementary Notes>

An exemplary electric work vehicle of the present invention may have a configuration (first configuration) of including a battery, an electric motor to which electric power is supplied from the battery, a travel unit that travels by a driving force of the electric motor, and a drive transmission unit that transmits the driving force of the electric motor to the travel unit, and the electric motor and the drive transmission unit are disposed on one side of the battery.

The electric work vehicle having the first configuration may have a configuration (second configuration) in which the electric motor is disposed on the one side with respect to an end portion of the drive transmission unit on the side opposite to the one side.

The electric work vehicle having the first or second configuration may have a configuration (third configuration) in which the one side is a front side of the vehicle.

The electric work vehicle having any one of the first to third configurations may have a configuration (fourth configuration) in which at least one power electronics component is disposed between the battery and the travel unit.

The electric work vehicle having the fourth configuration may have a configuration (fifth configuration) in which the one side is a front side of the vehicle, and the electric work vehicle further includes a work implement disposed behind the battery.

The electric work vehicle having the fifth configuration may have a configuration (sixth configuration) in which a hydraulic device that raises and lowers the work implement is disposed between the battery and the travel unit and behind the power electronics component.

The electric work vehicle having any one of the first to sixth configurations may have a configuration (a seventh configuration) in which the battery is disposed further inside than left and right end portions of the travel unit.

The electric work vehicle having any one of the first to seventh configurations may have a configuration (eighth configuration) in which the electric work vehicle further includes a main frame supported by the travel unit, and the main frame supports the battery and the electric motor.

The electric work vehicle having the eighth configuration may have a configuration (ninth configuration) in which the main frame supports the battery via an anti-vibration portion.

The electric work vehicle having the eighth or ninth configuration may have a configuration (tenth configuration) in which the main frame further supports at least one power electronics component.

The electric work vehicle having the tenth configuration may have a configuration (eleventh configuration) in which the battery and the at least one power electronics component are attached to the main frame with a use of a same member.

The electric work vehicle having any one of the eighth to eleventh configurations may have a configuration (twelfth configuration) in which the battery is attached to the main frame via a battery frame that supports the battery.

The electric work vehicle having any one of the eighth to twelfth configurations may have a configuration (thirteenth configuration) in which the electric work vehicle further includes a subframe disposed above the main frame, and at least a portion of the subframe is disposed above the battery and the electric motor.

The electric work vehicle having any one of the eighth to thirteenth configurations may have a configuration (fourteenth configuration) in which the electric motor is supported by the main frame and the travel unit.

### REFERENCE SIGNS LIST

1 electric work vehicle
3 work implement
7 anti-vibration rubber (anti-vibration portion)
13 travel unit
14 main frame
19 hydraulic device
151 electric motor
152 drive transmission unit
171 battery
172 battery frame
181 subframe

## Claims

1. An electric work vehicle comprising:
a battery;
an electric motor to which electric power is supplied from the battery;
a travel unit that travels by a driving force of the electric motor; and
a drive transmission unit that transmits the driving force of the electric motor to the travel unit,
wherein the electric motor and the drive transmission unit are disposed on one side of the battery.

2. The electric work vehicle according to claim 1, wherein the electric motor is disposed on the one side with respect to an end portion of the drive transmission unit on the side opposite to the one side.

3. The electric work vehicle according to claim 2, wherein the one side is a front side of the vehicle.

4. The electric work vehicle according to claim 1, wherein at least one power electronics component is disposed between the battery and the travel unit.

5. The electric work vehicle according to claim 4, wherein the one side is a front side of the vehicle, and the electric work vehicle further comprises a work implement disposed behind the battery.

6. The electric work vehicle according to claim 5, wherein a hydraulic device that raises and lowers the work implement is disposed between the battery and the travel unit and behind the power electronics component.

7. The electric work vehicle according to claim 1, wherein the battery is disposed further inside than left and right end portions of the travel unit.

8. The electric work vehicle according to claim 1, further comprising a main frame supported by the travel unit,
wherein the main frame supports the battery and the electric motor.

9. The electric work vehicle according to claim 8, wherein the main frame supports the battery via an anti-vibration portion.

10. The electric work vehicle of claim 9, wherein the main frame further supports at least one power electronics component.

11. The electric work vehicle according to claim 10, wherein the battery and the at least one power electronics component are attached to the main frame with a use of a same member.

12. The electric work vehicle according to claim 8, wherein the battery is attached to the main frame via a battery frame that supports the battery.

13. The electric work vehicle according to claim 8, further comprising a subframe disposed above the main frame,
wherein at least a portion of the subframe is disposed above the battery and the electric motor.

14. The electric work vehicle according to claim 8, wherein the electric motor is supported by the main frame and the travel unit.
